(19) Europäisches Patentamt
European Patent Office
Office européen des brevets

(11) **EP 0 986 162 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
*H02K 7/09* (2006.01)  *F16C 39/06* (2006.01)

(21) Anmeldenummer: **99810634.8**

(22) Anmeldetag: **14.07.1999**

(54) **Sensoranordnung in einem elektromagnetischen Drehantrieb**

Sensor arrangement in an electromagnetic rotary drive

Ensemble capteur dans un entraînement rotatif électromagnétique

(84) Benannte Vertragsstaaten:
**CH DE GB LI**

(30) Priorität: **24.08.1998 EP 98810833**

(43) Veröffentlichungstag der Anmeldung:
**15.03.2000 Patentblatt 2000/11**

(73) Patentinhaber: **Levitronix LLC**
**Waltham, MA 02451 (US)**

(72) Erfinder:
• **Schöb, Reto Dr.**
**8604 Volketswil (CH)**
• **Barletta, Natale**
**8037 Zürich (CH)**

(74) Vertreter: **Sulzer Management AG**
**Patentabteilung / 0067**
**Zürcherstrasse 14**
**8401 Winterthur (CH)**

(56) Entgegenhaltungen:
WO-A-90/03684      WO-A1-95/20260
WO-A1-96/31934     DE-A- 4 141 000
GB-A- 2 149 226    JP-A- 9 322 510
JP-A- 60 131 052   US-A- 4 479 078
US-A- 4 697 125    US-A- 5 172 021
US-A- 5 323 075    US-A- 5 633 546

• **MEUTER P.: 'Lagerloser Motor auf dem Prüfstand' SULZER TECHNICAL REVIEW Bd. 3/99,**

**Beschreibung**

Die Erfindung betrifft einen elektromagnetischen Drehantrieb, der als lagerloser Motor mit einem magnetisch gelagerten, permanentmagnetischen Rotor und einem Stator ausgestaltet ist, sowie ein Verfahren für den Betrieb eines solchen Drehantriebs gemäss dem Oberbegriff des unabhängigen Anspruchs der jeweiligen Kategorie.

Ein lagerloser Motor mit permanentmagnetischem Rotor ist ein elektromagnetischer Drehantrieb, der einen permanentmagnetisch erregten Rotor und einen Stator umfasst, wobei der Rotor mittels magnetischer Kräfte berührungslos gelagert ist. Das Charakteristikum, dem der lagerlose Motor seine Bezeichnung verdankt, ist es, dass er keine separaten Magnetlager für den Rotor aufweist. Dazu ist der Stator als Lager- und Antriebsstator ausgestaltet und der Rotor als passiv magnetischer Rotor, der sowohl als Lager- als auch als Antriebsrotor dient. Der Stator ist so ausgestaltet bzw. mit elektrischen Wicklungen versehen, dass er ein elektromagnetisches Drehfeld erzeugt, welches zum einen ein Drehmoment auf den Rotor ausübt, dass dessen Rotation um die Drehachse antreibt, und welches zum anderen eine beliebig einstellbare Querkraft auf den Rotor ausübt, sodass dessen radiale Position bezüglich einer zur Drehachse senkrechten Ebene vorgebbar bzw. aktiv steuerbar ist. Somit ist der Rotor im Betriebszustand mittels der elektrischen Wicklungen des Stators bezüglich dreier Freiheitsgrade, nämlich der Rotation um die Drehachse sowie der radialen Position in der zur Drehachse senkrechten Ebene (zwei Freiheitsgrade) aktiv ansteuerbar bzw. antreibbar.

Bezüglich dreier weiterer Freiheitsgrade, nämlich Verkippungen bezüglich der zur Drehachse senkrechten Ebene (zwei Freiheitsgrade) und der axialen Position ist der Rotor passiv magnetisch, das heisst nicht ansteuerbar, durch Reluktanzkräfte stabilisiert. Somit ist der Rotor im Betriebszustand durch die magnetische Wechselwirkung zwischen dem Lager/Antriebsstator und dem Rotor sowohl antreibbar als auch berührungslos lagerbar, ohne das hierfür separate Magnetlager vorhanden sind.

In diesem Sinne ist für die folgenden Ausführungen der Begriff "lagerloser Motor mit permanentmagnetischem Rotor" zu verstehen. Bezüglich weiterer Details der Ausgestaltung und der Ansteuerung bzw. Regelung des lagerlosen Motors sei hier auf die WO-A-96/31934 verwiesen.

In der WO-A-96/31934 ist ein solcher lagerloser Motor am Beispiel einer Rotationspumpe offenbart. Bei dieser ist der Rotor des lagerlosen Motors mit Flügeln versehen und bildet somit einen Integralrotor, das heisst, er übernimmt neben der Funktion des Rotors des Elektromotors auch die Funktion des Rotors der Pumpe Derartige Pumpen sind insbesondere für solche Anwendungen vorteilhaft, bei denen das zu fördernde Fluid nicht verunreinigt werden darf, beispielsweise zum Fördern biologischer Flüssigkeiten wie Blut oder hochreiner Flüssigkeiten wie Reinstwasser. Zudem eignen sich solche Rotationspumpen zum Fördern aggressiver Flüssigkeiten, die mechanische Lager in kurzer Zeit zerstören würden.

Im Vergleich zu konventionellen Pumpen mit magnetisch gelagertem Rotor haben solche Pumpen, die nach dem Prinzip des lagerlosen Motors arbeiten, den Vorteil, extrem kompakt und platzsparend zu sein und trotzdem auch bei hoher Leistungsfähigkeit bzw. Förderleistung alle Vorteile der berührungslosen magnetischen Lagerung des Rotors zu besitzen. Dies ist einer der Gründe, weshalb solche Pumpen unter anderem als Blutpumpen für Anwendungen innerhalb und ausserhalb des Körpers geeignet sind.

Für den Betrieb eines lagerlosen Motors mit einem permanentmagnetisch erregten Rotor, insbesondere für die Regelung des Antriebs und der Lage des Rotors, die üblicherweise mittels eines Vektorregelungsverfahrens bzw. eines feldorientierten Regelverfahrens erfolgt, ist es notwendig, die Richtung der Rotormagnetisierung, das heisst die momentane Lage der Magnetisierung des Rotors relativ zum ortsfesten Statorsystem zu kennen. Gemäss der WO-A-96/31934 wird hierzu vorgeschlagen, vier Magnetfeldsonden im Luftspalt zwischen dem Stator und dem Rotor anzuordnen.

Auch wenn sich diese Anordnung in der Praxis bewährt hat, so ergeben sich doch für einige Formen der Rotormagnetiserung Schwierigkeiten. Ist beispielsweise der Rotor blockförmig magnetiseret, so ändert sich das von den Magnetfeldsensoren im Luftspalt erfasste Signal über einen relativ grossen Drehwinkel des Rotors - wenn überhaupt - nur sehr wenig, sodass eine eindeutige Bestimmung der momentanen Richtung der Rotormagnetisierung praktisch nicht mehr möglich ist. In solchen Fällen müssten dann beispielsweise separate Drehgeber vorgesehen werden.

Es ist daher eine Aufgabe der Erfindung, eine bessere Sensoranordnung in einem lagerlosen Motor mit permanentmagnetisch erregtem Rotor vorzuschlagen, die es ermöglicht, die Richtung der Rotormagnetisierung und damit auch den geometrischen Rotorwinkel zu bestimmen. Gemäss einem weiteren Aspekt soll mittels der Sensoranordnung auch die axiale Position des Rotors bestimmbar sein. Es ist ferner eine Aufgabe der Erfindung, ein entsprechendes Verfahren für den Betrieb eines lagerlosen Motors mit permanentmagnetischem Rotor vorzuschlagen.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Erfindungsgemäss wird also ein elektromagnetischer Drehantrieb, der als lagerloser Motor mit einem magnetisch gelagerten, permanentmagnetischen Rotor und einem Stator ausgestaltet ist, vorgeschlagen, wobei der Stator (2) als Lager- und Antriebsstator ausgestaltet ist und der Drehantrieb keine separaten Magnetlager für den Rotor aufweist umfassend eine Sensoranordnung zur Bestimmung der Richtung der Rotormagnetisierung und/oder der axialen Position des Rotors welche mindestens zwei Sensoren zum Bestimmen eines magnetischen Flusses umfasst. Die beiden Sensoren sind derart bezüglich des Rotors angeordnet, dass mit ihnen Teilflüsse desjenigen magnetischen Flusses bestimmbar sind, den das axiale Streufeld des permanentmagnetischen Rotors erzeugt.

Erfindungsgemäss erfolgen also die Messungen zur Bestimmung der Lage der Rotormagnetisierung und/oder der axialen Position des Rotors im axialen Streufeld des Rotors. Hierdurch lässt sich auch in solchen Fällen, in denen die Rotormagnetisierung nicht stetig veränderlich über den Rotor verteilt ist, beispielsweise bei einer blockförmigen Rotormagnetisierung, die Richtung der Rotormagnetisierung bezüglich des ortsfesten Statorsystems - und damit auch die geometrische Winkellage des Rotors - bestimmen. Mit der erfindungsgemässen Anordnung bzw. dem erfindungsgemässen Verfahren lässt sich für alle in der Praxis relevanten Rotormagnetisierungen die momentane Lage bzw. die Richtung der Rotormagnetisierung beim Betrieb des lagerlosen Motors zuverlässig bestimmen. Da zudem hierfür kein separater, das heisst vom eigentlichen Rotor verschiedener, Drehgeber vonnöten ist, ist die erfindungsgemässe Sensoranordnung apparativ, insbesondere auch montagetechnisch, besonders einfach und somit kostengünstig.

Ein weiterer Vorteil liegt darin, dass mit der erfindungsgemässen Anordnung bzw. dem erfindungsgemässen Verfahren zusätzlich die axiale Position des Rotors bezüglich des Stators bestimmt werden kann, ohne dass hierfür weitere Sensoren benötigt werden. Auch dies reduziert den apparativen Aufwand für den lagerlosen Motor, speziell die Anzahl der notwendigen Sensoren, weil somit zwei für den Betrieb wesentliche Messgrössen, nämlich die Richtung der Rotormagnetisierung und die axiale Position des Rotors, mittels eines einzigen Sensorsystems erfassbar sind.

Vorzugsweise sind die Sensoren derart angeordnet, dass die Teilflüsse des magnetischen Flusses in einer ersten Messrichtung und in einer zweiten Messrichtung bestimmbar sind, wobei die Messrichtungen jeweils senkrecht bezüglich der axialen Richtung verlaufen, die durch die Soll-Drehachse des Rotors festgelegt ist, weil damit die Auswertung der Sensorsignale vereinfacht wird.

Bevorzugt ist der Rotor des lagerlosen Motors scheiben- oder ringförmig ausgestaltet. Die Sensoren sind dann bezüglich der axialen Richtung versetzt zum Rotor angeordnet, das heisst insbesondere oberhalb oder unterhalb des Rotors bezüglich seiner Soll-Drehachse. Dies ist eine besonders einfache Anordnung, um im axialen Streufeld des Rotors zu messen. Natürlich sind prinzipiell auch andere Geometrien des Rotors, beispielsweise auch glockenförmige, möglich.

Unabhängig von der speziellen Geometrie des Rotors ist es jedoch vorteilhaft, die Sensoren ausserhalb des Raums anzuordnen, der sich zwischen dem Rotor und dem Stator befindet. Somit sind nämlich keine Sensoren im Luftspalt zwischen dem Stator und dem Rotor vonnöten, sodass dieser Luftspalt kleiner ausgestaltet werden kann, was sich sehr positiv auf die magnetische Kopplung zwischen Stator und Rotor auswirkt.

Eine weiter vorteilhafte Massnahme besteht darin, die Sensoren in einer gemeinsamen Messebene anzuordnen, die sich senkrecht zur axialen Richtung erstreckt, weil sich hierdurch die Auswertung der Sensorsignale weiter vereinfacht.

Vorzugsweise sind die Sensoren so angeordnet, dass die erste und die zweite Messrichtung unter einem Winkel zueinander verlaufen, der ungefähr 90° ist oder ungleich einem ganzzahligen Vielfachen des Quotienten aus 180° und der Polpaarzahl des Rotors ist. Im Hinblick auf eine möglichst gute Signalerfassung und -auswertung hat es sich in der Praxis bewährt, die Sensoren so anzuordnen, dass die erste und die zweite Messrichtung unter einem Winkel zueinander verlaufen, der gleich dem Quotienten aus 90° und der Polpaarzahl des Rotors ist.

Um die Zuverlässigkeit der Bestimmung der Richtung der Rotormagnetisierung noch zu erhöhen, ist es vorteilhaft, mindestens einen weiteren Sensor vorzusehen, mit dem der Teilfluss des magnetischen Flusses des Streufelds des permanentmagnetischen Rotors in einer weiteren Messrichtung bestimmbar ist, die von der ersten und der zweiten Messrichtung verschieden ist. Durch diese Massnahme kann eine Fehlertoleranz der Sensoranordnung erreicht werden, weil sich die Richtung der Rotormagnetisierung bereits aus zwei der drei Sensorsignale bestimmen lässt.

Ferner ist es vorteilhaft, wenn jeder Sensor zwei Sensorelemente umfasst, die bezüglich der Soll-Drehachse des Rotors um 180° in Drehrichtung des Rotors versetzt zueinander angeordnet sind, die sich also jeweils paarweise bezüglich der Soll-Drehachse gegenüberliegen. Mit einer solchen Anordnung können systematische Fehler wie Common-Mode Störungen, Offsets und thermische Driften kompensiert werden.

Unter montagetechnischen Aspekten und im Hinblick auf eine besonders einfache Auswertung der Sensorsignale ist es vorteilhaft, die Sensoren und/oder Sensorelemente so anzuordnen, dass sie den diametralen, den radialen oder den tangentialen Teilfluss an ihrem Ort messen.

Gemäss einer bevorzugten Weiterentwicklung der Sensoranordnung sind ferner mindestens zwei Lagesensoren zur Bestimmung der radialen Position des Rotors bezüglich des Stators vorgesehen. Typischerweise hat der Stator eines lagerlosen Motors mit permanentmagnetisch erregtem Rotor mehrere radial in Richtung auf den Rotor verlaufende Statorzähne. Die Lagesensoren sind dann so angeordnet, dass mit ihnen der magnetische Fluss im Raum zwischen dem Rotor und dem Stator an zwei unterschiedlichen Messorten bestimmbar ist. Mit einer solchen Anordnung ist neben der Richtung der Rotormagnetisierung und der axialen Position des Rotors auch dessen radiale Position im Stator bestimmbar.

Vorzugsweise sind die Lagesensoren jeweils in einer Lücke zwischen zwei benachbarten Statorzähnen angeordnet, weil durch diese Massnahme der durch die Statorzähne fliessende magnetische Steuerfluss zur Steuerung der Rotorposition von den Lagesensoren nicht mitgemessen wird.

Damit auch für solche Rotormagnetisierungen, die Nulldurchgänge aufweisen, eine zuverlässige Bestimmung der radialen Position des Rotors für jeden Rotorwinkel möglich ist, sind bevorzugt mindestens drei Lagesensoren vorgesehen, die so angeordnet sind, dass mit ihnen der magnetische Fluss im Raum zwischen dem Rotor und dem Stator an drei unterschiedlichen Messorten bestimmbar ist, deren Lage so ist, dass für jede Drehwinkelstellung des Rotors, das heisst für jeden Rotorwinkel, die Winkellage von mindestens zwei Messorten von der Winkellage der Nulldurchgänge der Rotormagnetisierung verschieden ist.

Auch für die Lagesensoren ist es vorteilhaft, wenn jeder Lagesensor zwei Sensorelemente umfasst, die bezüglich der Soll-Drehachse des Rotors um 180° in Drehrichtung des Rotors versetzt zueinander angeordnet sind, weil sich hierdurch die bereits erwähnten systematischen Fehler auch bei der Bestimmung der radialen Position des Rotors kompensieren lassen.

Das erfindungsgemässe Verfahren für den Betrieb eines elektromagnetischen Drehantriebs, der als lagerloser Motor mit einem magnetisch gelagerten, permanentmagnetischen Rotor und einem Stator ausgestaltet ist, wobei der Stator (2) als Lager- und Antriebsstator ausgestaltet ist und der Drehantrieb keine separaten Magnetlager für den Rotor aufweist bei welchem Verfahren die Richtung der Rotormagnetisierung mit Hilfe von mindestens zwei Sensoren zum Bestimmen eines magnetischen Flusses bestimmt wird, ist dadurch gekennzeichnet, dass zur Bestimmung der Richtung der Rotormagnetisierung Teilflüsse desjenigen magnetischen Flusses herangezogen werden, den das axiale Streufeld des permanentmagnetischen Rotors erzeugt.

Aus den bereits erwähnten Gründen sind auch für das erfindungsgemässe Verfahren die folgenden Massnahmen vorteilhaft:

- - die Teilflüsse des magnetischen Flusses des Streufeldes werden in einer ersten und in einer zweiten Messrichtung bestimmt, welche Messrichtungen jeweils senkrecht bezüglich der axialen Richtung verlaufen, die durch die Soll-Drehachse des Rotors festgelegt ist;

- - die Teilflüsse des magnetischen Flusses werden ausserhalb des Raums bestimmt, der sich zwischen dem Rotor und dem Stator befindet;

- - die Teilflüsse des magnetischen Flusses werden jeweils im gleichen axialen Abstand vom Rotor bestimmt;

- die Differenzsignale von jeweils zwei einen Sensor bildenden Sensorelementen, die bezüglich der Soll-Drehachse des Rotors um 180° in Drehrichtung des Rotors versetzt zueinander angeordnet sind, werden zur Bestimmung der Richtung der Rotormagnetisierung herangezogen;

- mittels der Sensoren und/oder Sensorelemente wird jeweils der diametrale, der radiale oder der tangentiale Teilfluss ermittelt.

Die Richtung der Rotormagnetisierung wird vorzugsweise durch eine trigonometrische Analyse der Teilflüsse oder durch einen Vergleich der Teilflüsse mit einer elektronischen Nachschlagtabelle bestimmt.

Eine weitere vorteilhafte Massnahme besteht darin, die vom Stator erzeugten Streufelder rechnerisch zu kompensieren. Dies kann beispielsweise so erfolgen, dass zunächst in einer Art Kalibrierungsmessung, die ohne den Rotor durchgeführt wird, mit den Sensoren das Streufeld des Stators gemessen wird und die daraus bestimmten Werte in einem Speicher, z. B. einem EPROM, abgelegt und gespeichert werden. Anschliessend können beim Betrieb des lagerlosen Motors (mit Rotor) die von den Sensoren erfassten Messwerte bezüglich der vom Streufeld des Stators herrührenden Signale korrigiert werden.

Gemäss einem weiteren Aspekt des erfindungsgemässen Verfahrens werden die Teilflüsse des magnetischen Flusses des Streufelds des Rotors zur Bestimmung der axialen Position des Rotors herangezogen. Hierzu wird vorzugsweise der Zusammenhang zwischen den Signalen der Sensoren und der axialen Position des Rotors in einer elektronischen Nachschlagtabelle abgespeichert, und beim Betrieb des Drehantriebs mit Hilfe dieser elektronischen Nachschlagtabelle die axiale Position des Rotors aus den Teilflüssen des magnetischen Flusses des Streufelds bestimmt.

Gemäss einer bevorzugten Weiterentwicklung des erfindungsgemässen Verfahrens wird ferner der magnetische Fluss im Raum zwischen dem Rotor und dem Stator an zwei unterschiedlichen Messorten bestimmt und die radiale Position des Rotors unter Verwendung der Richtung der Rotormagnetisierung, dem an den Messorten im Raum zwischen dem Rotor und dem Stator bestimmten magnetischen Fluss sowie der Flussverteilung im Luftspalt bei zentrischem Rotor ermittelt. Wie bereits erwähnt, hat der Stator eines lagerlosen Motors mit permanent magnetisch erregtem Rotor typischerweise mehrere radial in Richtung auf den Rotor verlaufende Statorzähne. Mit dem Raum zwischen dem Rotor und dem Stator sind dann sowohl der Luftspalt zwischen den Statorzähnen und dem Rotor als auch die Lücken zwischen den Statorzähnen gemeint.

Wie im Zusammenhang mit der Sensoranordnung bereits erläutert, wird auch bei dem erfindungsgemässen Verfahren vorzugsweise der magnetische Fluss im Raum zwischen dem Rotor und dem Stator an mindestens drei verschiedenen Messorten bestimmt, die so gewählt werden, dass für jede Drehwinkelstellung des Rotors, das heisst für jeden Rotorwinkel, die Winkellage von mindestens zwei Messorten von der Winkellage der Nulldurchgänge der Rotormagnetisierung verschieden ist.

Auch für das erfindungsgemässe Verfahren ist es vorteilhaft, zusätzlich den magnetischen Fluss im Raum zwischen dem Rotor und dem Stator an denjenigen Orten zu bestimmen und zur Ermittelung der radialen Position des Rotors heranzuziehen, die bezüglich der Messorte um 180° in Drehrichtung des Rotors gesehen versetzt sind, weil sich hierdurch systematische Fehler kompensieren lassen.

Weitere vorteilhafte Massnahmen und bevorzugte Ausgestaltungen der Erfindungsgegenstände ergeben sich aus den abhängigen Ansprüchen.

Im folgenden wird die Erfindung sowohl in Bezug auf die apparativen als auch in Bezug auf die verfahrenstechnischen Aspekte anhand von Ausführungsbeispielen und anhand der Zeichnung näher erläutert. In der Zeichnung sind identische oder von der Funktion her gleichwertige Teile mit den gleichen Bezugszeichen versehen. In der schematischen, nicht massstäblichen Zeichnung zeigen:

Fig. 1: eine Darstellung von wesentlichen Teilen eines Ausführungsbeispiels eines lagerlosen Motors mit permanentmagnetisch erregtem Rotor,

Fig. 2-5: jeweils eine symbolische Darstellung der Rotormagnetisierung für verschiedenen Ausgestaltungen und Magnetisierungen des Rotors,

Fig. 6: eine Aufsicht auf ein Ausführungsbeispiel der erfindungsgemässen Sensoranordnung (Statorzähne nicht dargestellt),

Fig. 7: einen Schnitt durch das Ausführungsbeispiel gemäss Fig. 6 entlang der Schnittlinie VII-VII in Fig. 6,

Fig. 8-10: jeweils eine Darstellung des Verlaufs des magnetischen Streufelds für verschiedene zweipolig magnetisierte Rotoren,

Fig. 11: eine Darstellung von zwei Teilflüssen des axialen Streufelds eines zweipolig magnetisierten Rotors,

Fig. 12: eine Aufsicht auf ein zweites Ausführungsbeispiel der erfindungsgemässen Sensoranordnung,

Fig. 13: einen Schnitt durch das zweite Ausführungsbeispiel gemäss Fig. 12 entlang der Schnittlinie XIII-XIII in Fig. 12,

Fig.13a: eine Darstellung der tangential verlaufenden Feldlinien des Streufelds eines vierpolig magnetisierten Rotors,

Fig.13b: eine Darstellung der radial verlaufenden Feldlinien des Streufelds des vierpolig magnetisierten Rotors aus Fig. 13a,

Fig. 14-15: wie Fig. 12, aber für Varianten des zweiten Ausführungsbeispiels,

Fig. 16: Darstellungen von jeweils zwei Teilflüssen des axialen Streufelds für einen vierpolig, blockförmig magnetisierten Rotor und eine Sensoranordnung gemäss Fig. 12 (oben), Fig. 14 (Mitte) und Fig. 15 (unten),

Fig. 17: eine Aufsicht auf eine Variante des Ausführungsbeispiels gemäss Fig. 6 (ohne Stator),

Fig. 18: eine Darstellung von drei Teilflüssen, die mit der Sensoranordnung gemäss Fig. 17 bestimmbar sind,

Fig. 19: eine Aufsicht auf eine weitere Variante des Ausführungsbeispiels gemäss Fig. 6 (ohne Stator),

Fig. 20: eine Darstellung des Verlaufs der Amplitude des axialen Streufelds für einen diametral magnetisierten, scheibenförmigen Rotor,

Fig. 21: eine Darstellung des Verlaufs der Amplitude und der Phase des axialen Streufelds für einen Rotor gemäss Fig. 9,

Fig. 22: eine Schnittdarstellung zur Verdeutlichung der Anordnung der Lagesensoren bei einem Ausführungsbeispiel einer Weiterentwicklung der erfindungsgemässen Sensoranordnung,

Fig. 23: eine Darstellung zur Verdeutlichung der Festlegung von einigen Winkeln und Strecken im Statorsystem,

Fig. 24: eine Darstellung der Flussverteilungsfunktion für einen vierpolig, blockförmig magnetisierten Rotor, und

Fig. 25: Darstellungen einer möglichen Anordnung der Lagesensoren für eine Variante mit drei Lagesensoren.

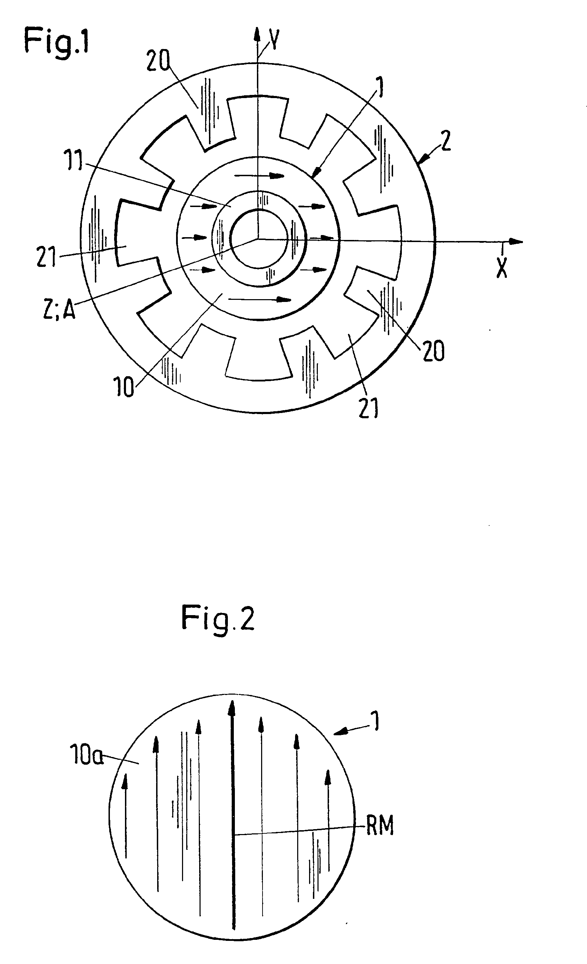

Es wurde bereits eingangs erläutert, was unter einem lagerlosen Motor mit permanentmagnetischem Rotor im Rahmen dieser Ausführungen zu verstehen ist. Ein solcher lagerloser Motor ist ein elektromagnetischer Drehantrieb mit einem permanentmagnetischen Rotor 1 (siehe Fig. 1), der um eine Drehachse A rotierbar ist und der mittels Magnetkräften berührungslos gelagert ist. Es ist ein Stator 2 vorgesehen, welcher als Lager- und Antriebsstator ausgestaltet ist, das heisst es ist keine separate magnetische Lagervorrichtung vorgesehen. Dazu umfassen die elektrischen Wicklungen des Stators beispielsweise - wie dies in der bereits zitierten WO-A-96/31934 offenbart ist - eine Antriebswicklung mit der Polpaarzahl p und eine Steuerwicklung mit der Polpaarzahl p$\pm$1, mit denen ein elektromagnetisches Drehfeld erzeugbar ist, dass sowohl ein antreibendes Drehmoment als auch eine beliebig einstellbare Querkraft auf den Rotor 1 ausübt. Der permanentmagnetische Rotor 1 ist somit bezüglich dreier Freiheitsgrade, nämlich der Rotation um die Drehachse A und seiner radialen Position bezüglich einer zur Drehachse senkrechten Ebene (zwei Freiheitsgrad) aktiv steuerbar bzw. regelbar und bezüglich dreier weiterer Freiheitsgrade, nämlich seiner axiale Auslenkung in Richtung der Drehachse und Verkippungen bezüglich der zur Drehachse A senkrechten Ebene (zwei Freiheitsgrade) passiv magnetisch durch Reluktanzkräfte stabilisiert.

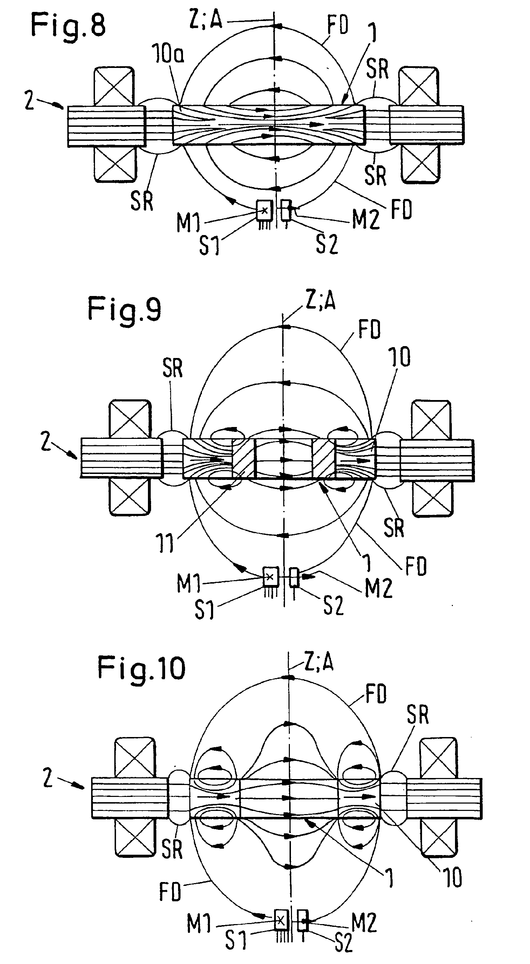

In Fig. 1 sind zum besseren Verständnis die wesentlichen Teile eines Ausführungsbeispiels eines solchen lagerlosen Motors mit permanentmagnetischem Rotor 1 dargestellt. Bei diesem Ausführungsbeispiel umfasst der ringförmige Rotor 1 einen permanentmagnetischen Ring 10, dessen Magnetisierung durch die Pfeile ohne Bezugszeichen angedeutet ist, sowie einen Eisenrückschluss 11, der radial innenliegend bezüglich des permanentmagnetischen Rings 10 angeordnet ist. Der Rotor 1 ist von einem Stator 2 umgeben, der mehrere radial in Richtung auf den Rotor 1 verlaufende Statorzähne 20 mit dazwischenliegenden Lücken 21 aufweist. Mittels elektrischer Wicklungen 22 (siehe z. B. Fig. 7), die in Fig. 1 nicht dargestellt sind, und die um die Statorzähne 20 herum gewickelt sind, lässt sich das bereits erwähnte elektromagnetische Drehfeld zum Antreiben des Rotors 1 und zur aktiven Regelung seiner radialen Position im Stator 2 erzeugen. Die hierzu notwendigen Versorgungs-, Steuer- und Regeleinrichtungen sind aus Gründen der besseren Übersicht nicht dargestellt.

Üblicherweise werden für die Beschreibung des lagerlosen Motors, insbesondere für seine mathematische Beschreibung zwei Koordinatensysteme verwendet, nämlich das Statorsystem und das Rotorsystem, die wie folgt festgelegt sind.

Das Statorsystem ist ein kartesisches Koordinatensystem mit den Koordinatenachsen X,Y,Z, das bezüglich des Stators 2 ortsfest ist, und dessen Ursprung im Zentrum des Stators 2 liegt, das heisst im geometrischen Mittelpunkt des vom Stator 2 umgebenen Raums. Die Z-Achse zeigt definitionsgemäss in Richtung der Soll-Drehachse A des Rotors 1, womit diejenige Drehachse gemeint ist, um die der Rotor 1 im Betriebszustand rotiert, wenn er sich in einer exakt zentrierten Position bezüglich des Stators 2 befindet, so wie dies in Fig. 1 dargestellt ist. In Fig. 1 steht die Z-Achse des Statorsystems senkrecht auf der Zeichenebene. Die Festlegung der X- und der Y-Achse in der zur Z-Achse senkrechten Ebene, die den Ursprung enthält ist willkürlich. Die durch die X- und die Y-Achse aufgespannte X-Y-Ebene ist folglich die Ebene, in welcher der Rotor 1 im Betrieb normalerweise rotiert, das heisst falls er nicht verkippt oder axial ausgelenkt ist.

Das Rotorsystem ist ebenfalls ein kartesisches Koordinatensystem mit den Koordinatenachsen X',Y',Z' (nicht dargestellt), das jedoch bezüglich des Rotors 1 ortsfest ist. Sein Ursprung liegt im geometrischen Zentrum des Rotors 1, ist also identisch mit dem Ursprung des Statorsystems, wenn der Rotor 1 bezüglich der axialen (auf die Z-Achse bezogenen) und der radialen (auf die X-Y-Ebene bezogenen) Position zentriert im Stator 2 ist. Die Z'-Achse des Rotorsystems ist durch die Drehachse festgelegt, um die der Rotor 1 rotiert, die Festlegung der X'- und der Y'-Achse ist wiederum willkürlich. Falls der Rotor 1 im Betrieb exakt zentriert bezüglich des Stators 2 und verkippungsfrei rotiert - also um seine Soll-Drehachse A rotiert - ist die Drehachse gleich der Soll-Drehachse A. Somit fallen die Z-Achse des Statorsystems und die Z'-Achse des Rotorsystems zusammen und die X'- sowie die Y'-Achse des Rotorsystems rotieren um diese gemeinsame Z-Achse.

Im folgenden ist mit der Bezeichnung "axiale Richtung" die Richtung der Soll-Drehachse A gemeint, die identisch mit der Richtung der Z-Achse des Statorsystems ist. Mit "axialer Position" ist die Lage bezüglich der axialen Richtung gemeint und mit "radialer Position" die Lage bezüglich der X-Y-Ebene des Statorsystems. Zur Beschreibung der Winkellage des Rotors 1 in der X-Y-Ebene des Statorsystems wird im folgenden der Begriff des Rotorwinkels verwendet. Dieser gibt den Winkel zwischen der bezüglich des Rotors 1 ortsfesten X'- bzw. der Y'-Achse des Rotorsystems und der bezüglich des Stators 2 ortsfesten X- bzw. Y-Achse des Statorsystems an. Es sei ohne Beschränkung der Allgemeinheit vereinbart, dass für den Rotorwinkel Null der Rotor 1 so im Stator 2 orientiert ist, dass die X'-Achse des Rotorsystems mit der X-Achse des Statorsystems zusammenfällt.

Für den Betrieb eines lagerlosen Motors mit permanentmagnetisch erregtem Rotor ist es notwendig, beispielsweise für die Antriebsregelung, die typischerweise mittels einer Vektorreglung bzw. einer feldorientierten Regelung erfolgt, die momentane Richtung oder Lage der Rotormagnetisierung im Statorsystem zu kennen. Bevor nun erläutert wird, wie diese erfindungsgemäss bestimmt wird, werden zum besseren Verständnis zunächst mit beispielhaftem Charakter einige möglichen Ausgestaltungen des permanentmagnetischen Rotors 1 und der Rotormagnetisierung, die für die Praxis besonders relevant sind, anhand der Fig. 2-5 erläutert.

Die Fig. 2-5 zeigen jeweils eine Aufsicht auf den permanentmagnetischen Rotor 1, die Pfeile ohne Bezugszeichen deuten symbolisch den Verlauf der Magnetisierung im Rotor 1 an, der mit dem Bezugszeichen RM bezeichnete Pfeil stellt symbolisch die Richtung der resultierenden Rotormagnetisierung dar. Die Rotormagnetisierung kann üblicherweise durch eine Rotormagnetisierungsfunktion beschrieben werden. Diese gibt im wesentlichen den vom permanetmagnetischen Rotor 1 im Luftspalt zwischen dem Stator 2 und dem Rotor 1 erzeugten magnetischen Fluss in Abhängigkeit einer Winkelvariablen an, die z. B. den Polarwinkel des jeweiligen Aufpunkts in der X'-Y'-Ebene des Rotorsystems angibt. Dies soll an einem Beispiel verdeutlicht werden. Ist beispielsweise der Rotor sinusförmig magnetisiert, dann heisst dies, dass die Rotormagnetisierungsfunktion eine Sinus-Funktion ist. Misst man für eine solche Rotormagnetisierung bei stillstehendem Rotor 1 den magnetischen Fluss entlang des Umfangs des Rotors 1 als Funktion des Polarwinkels in der X'-Y'-Ebene, so resultiert eine Sinus-Funktion. Oder, was gleichwertig ist, man misst an einem festen Ort im Luftspalt zwischen dem Rotor 1 und dem Stator 2, z. B. auf der X-Achse des Statorsystems, den vom permanentmagnetischen Rotor 1 erzeugten Fluss und dreht den Rotor 1 um 360° um die Soll-Drehachse A. Der so gemessene magnetische Fluss ist dann eine Sinusfunktion des Rotorwinkels.

Fig. 2 zeigt eine scheibenförmige Ausgestaltung des Rotors 1 mit einer permanentmagnetischen Scheibe 10a. Die Scheibe 10a ist zweipolig (Polpaarzahl eins), sinusförmig magnetisiert, das heisst die Rotormagnetisierungsfunktion ist für diesen Rotor 1 eine Sinusfunktion, welche die gleiche Periodizität aufweist wie der geometrische Rotorwinkel. Die Richtung der Rotormagnetisierung ist durch den Pfeil RM symbolisch dargestellt.

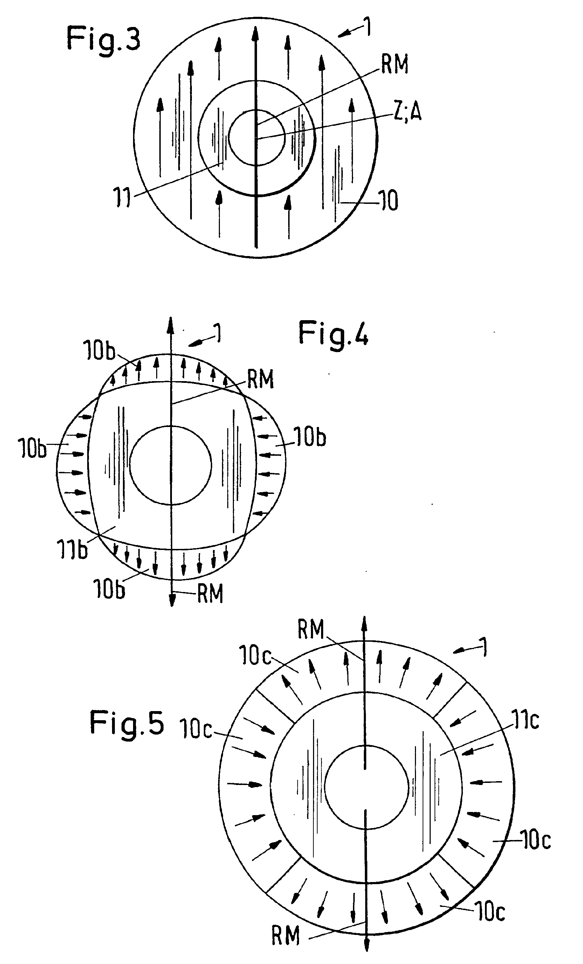

Der Rotor 1 gemäss Fig. 3 ist ebenfalls als zweipolig, sinusförmig magnetisierter Rotor 1 ausgestaltet. Der Rotor ist hier jedoch als ringförmiger Rotor 1 ausgestaltet mit einem permanentmagnetischen Ring 10 und einem Eisenrückschluss 11, der radial innenliegend bezüglich des Rings 10 angeordnet ist.

Bei der im wesentlichen ringförmigen Ausgestaltung des Rotors gemäss Fig. 4 sind vier permanentmagnetische Segmente 10b um einen gemeinsamen Eisenrückschluss 11b herum angeordnet, wobei jedes Segment 10b sinusförmig magnetisiert ist und einander gegenüberliegende Segmente 10b jeweils in entgegengesetzter Richtung magnetisiert sind. Diese Ausgestaltung ist ein vierpolig, sinusförmig magnetisierter Rotor 1, das heisst seine Polpaarzahl ist zwei und die Rotormagnetisierungsfunktion ist eine Sinusfunktion, deren Periode halb so gross ist wie die des Rotorwinkels. Über den gesamten Umfang betrachtet durchläuft also die Rotormagnetisierungsfunktion zwei Perioden. Bei dieser Ausgestaltung ist die Richtung der Rotormagnetisierung RM nicht mehr eindeutig, wie dies die beiden Pfeile RM andeuten.

Fig. 5 zeigt eine ringförmige Ausgestaltung des Rotors 1 mit vier permanentmagnetischen Ringsegmenten 10c, die so in Umfangsrichtung nebeneinanderliegend angeordnet sind, dass sie einen Ring bilden. Radial innen liegend bezüglich dieses Rings ist ein ringförmiger Eisenrückschluss 11c vorgesehen. Jedes Ringsegment 10c ist homogen radial magnetisiert, wobei benachbarte Ringsegmente 10c jeweils in die entgegengesetzte Richtung magnetisiert sind, das heisst die Ringsegmente 10c sind wechselweise radial nach aussen und radial nach innen magnetisiert. Diese Ausgestaltung ist ein vierpolig blockförmig oder rechteckförmig magnetisierter Rotor 1. Die Rotormagnetisierungsfunktion ist eine Rechteckfunktion, die über den gesamten Umfang betrachtet zweimal ihre Periode durchläuft. Auch hier ist die Richtung der Rotormagnetisierung RM nicht mehr eindeutig, wie dies die beiden Pfeile RM andeuten.

Natürlich sind in ähnlicher Weise auch noch andere Rotormagnetisierungen möglich, beispielsweise solche mit höheren Polpaarzahlen und qualitativ anderen Rotormagnetisierungsfunktionen, z. B. trapezförmige Magnetisierungen.

Durch die Erfindung wird nun Drehantrieb mit einer Sensoranordnung bzw. ein Verfahren vorgeschlagen, um die momentane Lage oder Richtung der Rotormagnetisierung RM im Statorsystem zu bestimmen. Für eindeutige Rotormagnetisierungen (siehe Fig. 2 und 3) ist dann auch gleichzeitig der geometrische Rotorwinkel bekannt, für nicht eindeutige Rotormagnetisierungen (siehe Fig. 4 und 5) gehören zu jeder Lage der Rotormagnetisierung bezüglich des Statorsystems zwei sich um 180° unterscheidende oder im allgemeinen mehrere geometrische Rotorwinkel. Dies bedeutet jedoch für die Praxis keine Einschränkung, denn diese zwei oder mehr Rotorwinkel gehören zu magnetisch äquivalenten Winkellagen des Rotors 1 im Stator 2, sodass auch für nicht eindeutige Rotormagnetisierungen mit der Richtung der Rotormagnetisierung im Statorsystem de facto der geometrische Rotorwinkel bekannt ist.

Erfindungsgemäss erfolgt die Bestimmung der Richtung der Rotormagnetisierung RM bezüglich des Statorsystems mit Hilfe von zwei Sensoren zum Bestimmen eines magnetischen Flusses, die so angeordnet sind, dass mit ihnen Teilflüsse desjenigen magnetischen Flusses bestimmbar sind, den das axiale Streufeld des permanentmagnetischen Rotors 1 erzeugt. Der vom Rotor 1 erzeugte Fluss lässt sich in den Hauptfluss und den Streufluss aufteilen, wobei der Hauptfluss derjenige magnetische Fluss ist, der vom Rotor 1 durch den Luftspalt zwischen Rotor 1 und Stator 2 zum Stator 2 geführt wird und der Streufluss alle anderen vom permanentmagnetischen Rotor 1 erzeugten magnetischen Flüsse umfasst. Mit dem Streufeld des Rotors 1 ist dann das Feld gemeint, das mit dem Streufluss verknüpft ist, also insbesondere das axiale Streufeld des Rotors 1, das der Rotor 1 in dem bezüglich der axialen Richtung zu ihm benachbarten Raum erzeugt, aber auch dasjenige vom Rotor 1 erzeugte Feld, das durch Feldlinien beschrieben wird, die zwischen dem Rotor 1 und dem Stator 2 verlaufen, jedoch ausserhalb des Luftspalts. Dieser letztgenannte Teil des Streufelds wird im Folgenden als radiales Streufeld bezeichnet.

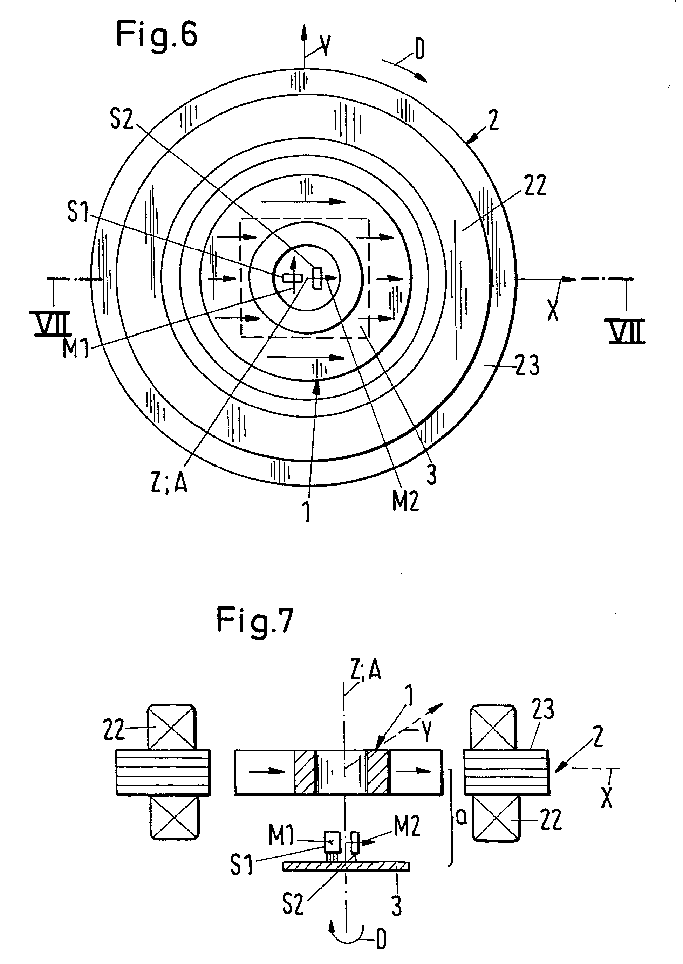

Fig. 6 zeigt eine Aufsicht auf ein erstes Ausführungsbeispiel der Erfindung, welches insbesondere für zweipolig magnetisierte Rotoren 1 geeignet ist. In Fig. 7 ist ein Schnitt entlang der Linie VII-VII durch das Ausführungsbeispiel gemäss Fig. 6 dargestellt. Der Stator 2 mit einem Statorblechpaket 23 und den um die Statorzähne gewickelten elektrischen Wicklungen 22 ist nur symbolisch angedeutet. Der Rotor 1 ist als scheibenförmiger zweipolig magnetisierter Rotor 1 gemäss der Ausgestaltung in Fig. 3 ausgebildet. Die Drehrichtung des Rotors 1 ist durch den Pfeil D angedeutet. Die Achsen X,Y,Z des Statorsystems sind ebenfalls eingezeichnet. Ferner sind zwei Sensoren S1, S2 zum Bestimmen des magnetischen Flusses vorgesehen, die auf einem gemeinsamen Bauteil, beispielsweise einem Chip oder Elektronikprint 3, montiert sind, das in einem nicht dargestellten Gehäuse untergebracht sein kann. Die Sensoren S1,S2 sind mit einer nicht dargestellten Signalverarbeitungs- und Auswerteeinheit verbunden. Als Sensoren können alle an sich bekannten Sensoren zum Bestimmen eines magnetischen Flusses, wie z. B. Magnetfeldsonden, Hall-Sensoren, magnetoresistive Sonden oder Giant-Magneto-Resistive (GMR) - Sensoren verwendet werden.

Die Sensoren S1, S2 sind bezüglich der axialen Richtung versetzt zum Rotor 1 angeordnet, darstellungsgemäss (Fig. 7) unterhalb des Rotors 1. Sie befinden sich nicht im Raum zwischen dem Stator 2 und dem Rotor 1, wobei mit diesem Raum der vom Stator umgebene Raum gemeint ist, also der Luftspalt zwischen den Statorzähnen 20 (Fig. 1) und dem Rotor 1 sowie die Lücken 21 zwischen den Statorzähnen 20. Die Sensoren S1, S2 sind in einer gemeinsamen Messebene angeordnet, die parallel zur X-Y-Ebene des , Statorsystems liegt und von dieser einen Abstand a hat. Somit können die Sensoren an ihrem jeweiligen Ort das axiale Streufeld des Rotors 1 messen. Der Sensor S1 ist so angeordnet, dass er den Teilfluss des axialen Streufelds des Rotors 1 in einer ersten Messrichtung misst, die durch den Pfeil M1 dargestellt ist, wobei mit diesem Teilfluss die Komponente des axialen Streufelds in der ersten Messrichtung M1 gemeint ist. Der Sensor S2 ist so angeordnet, dass er den Teilfluss des axialen Streufelds in einer zweiten Messrichtung misst, die durch den Pfeil M2 dargestellt ist, und die von der ersten Messrichtung M1 verschieden ist. Beide Messrichtungen M1 und M2 verlaufen jeweils senkrecht bezüglich der Soll-Drehachse A (Z-Achse des Statorsystems). Bei diesem Ausführungsbeispiel misst der Sensor S2 den diametralen Teilfluss des axialen Streufelds an seinem Ort, und der Sensor S1 die dazu senkrechte Komponente, welche für den dargestellten Rotorwinkel ungefähr Null ist (siehe auch Fig. 8). Bei dieser Anordnung stehen also die beiden Messrichtungen M1 und M2 senkrecht aufeinander, im speziellen ist die erste Messrichtung M1 parallel zur Y-Achse des Statorsystems und die zweite Messrichtung M2 parallel zur X-Achse des Statorsystems.

Aus diesen beiden Teilflüssen, die in den beiden verschiedenen, jeweils parallel zur X-Y-Ebene des Statorsystems liegenden Messrichtungen M1 und M2 bestimmt werden, lässt sich dann die Lage bzw. Richtung der Rotormagnetisierung im Statorsystem bestimmen.

Zum besseren Verständnis zeigen die Fig. 8-10 für verschiedene zweipolig magnetisierte Rotoren 1 jeweils qualitaiv den Verlauf des Streufelds des Rotors 1. Dieses umfasst das axiale und das radiale Streufeld. Das axiale Streufeld ist dabei jeweils dasjenige Feld, das durch die darstellungsgemäss oberhalb und unterhalb des Rotors 1 eingezeichneten Feldlinien repräsentiert wird. Die diametral bezüglich des Rotors 1 verlaufenden Feldlinien des axialen Streufelds, die mit dem Bezugszeichen FD bezeichnet sind, repräsentieren dabei den diametralen Teilfluss des axialen Streufelds. Das radiale Streufeld wird durch die mit dem Bezugszeichen SR versehenen Feldlinien repräsentiert, die zwischen dem Rotor 1 und dem Stator 2, jedoch ausserhalb des Luftspalts, verlaufen. Zusätzlich zum Streufeld des Rotors 1 ist jeweils noch das vom Rotor 1 herrührende und mit dem Hauptfluss verknüpfte Feld im Luftspalt zwischen dem Rotor 1 und dem Stator 2 sowie das Feld im Innern des Rotors 1 durch Feldlinien angedeutet. Die Sensoren S1, S2 sowie die zugehörigen Messrichtungen M1, M2 sind ebenfalls dargestellt. Für die jeweils dargestellten Rotorwinkel misst der Sensor S2 jeweils den diametralen Teilfluss des axialen Streufelds an seinem Ort. Natürlich ist es auch möglich, einen oder beide Sensoren S1 und S2 so anzuordnen, dass mit ihm oder ihnen Teilflüsse des radialen Streufelds des Rotors 1 bestimmbar sind. Dazu können die Sensoren S1,S2 im Bereich des Stators 2, beispielsweise am oder in der Nähe vom Statorblechpakets 23 (Fig. 7), angeordnet werden.

Fig. 8 zeigt das Streufeld für den scheibenförmigen Rotor 1 mit der permanentmagnetischen Scheibe 10a, so wie er in Fig. 2 dargestellt ist. Fig. 9 zeigt das Streufeld für den ringförmigen Rotor 1 mit dem permanentmagnetischen Ring 10 und dem Eisenrückschluss 11 so wie er in Fig. 3 dargestellt ist. Fig. 10 zeigt das Streufeld für einen ringförmigen Rotor 1 mit einem permanentmagnetischen Ring 10, aber ohne Eisenrückschluss.

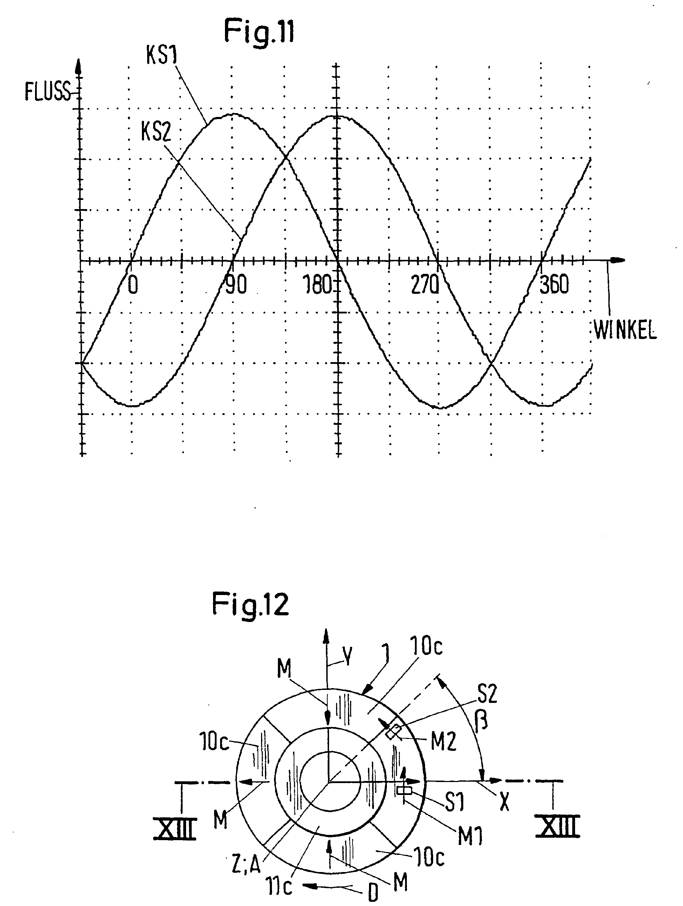

Fig. 11 zeigt einen typischen Verlauf der beiden mittels der Sensoren S1 und S2 bestimmten Teilflüsse des axialen Streufelds für einen zweipolig sinusförmig magnetisierten Rotor 1 und für eine Anordnung der Sensoren S1, S2, bei welcher die beiden Messrichtungen M1 und M2 senkrecht aufeinander stehen, bei einer Drehung des Rotors um 360° um die Z-Achse des Statorsystems. Die Kurve KS1 repräsentiert das Signal des Sensors S1, die Kurve KS2 das Signal des Sensors S2. Es ist zu erkennen, dass für eine sinusförmige Magnetisierung des Rotors 1 auch die über eine Rotordrehung gemessenen Streuflüsse zumindest näherungsweise sinusförmig verlaufen. Somit ist für jeden beliebigen Rotorwinkel die Richtung der Rotormagnetisierung bezüglich des Statorsystems eindeutig aus den beiden Teilflüssen bestimmbar. Durch die von den Sensoren S1, S2 erfassten Teilflüsse kennt man jeweils einen Punkt auf der Kurve KS1 und einen Punkt auf der Kurve KS2. Mit Hilfe dieser beiden Punkte und der bekannten Rotormagnetisierungsfunktion ist dann die Richtung der Rotormagnetisierung eindeutig z. B. trigonometrisch bestimmbar.

Ist der Rotor 1 beispielsweise blockförmig magnetisiert, so sind zwar die über eine Rotordrehung gemessenen Teilflüsse des axialen Streufeldes nicht mehr exakt sinusförmig, allerdings - im Unterschied zur Feldverteilung im Luftspalt zwischen Rotor 1 und Stator 2 - stetig veränderlich, das heisst in einer der Fig. 11 entsprechenden Darstellung existieren im wesentlichen keine "Plateaus", auf denen der gemessene Teilfluss über einen grösseren Winkelbereich konstant ist. Die Richtung der Rotormagnetisierung kann dann aus den gemessenen Teilflüssen durch einer trigonometrische Analyse, z. B. mittels einer trigonometrischen Funktion höherer Ordnung, oder durch einen Vergleich mit einer gespeicherten elektronischen Nachschlagtabelle (look-up-table) eindeutig bestimmt werden.

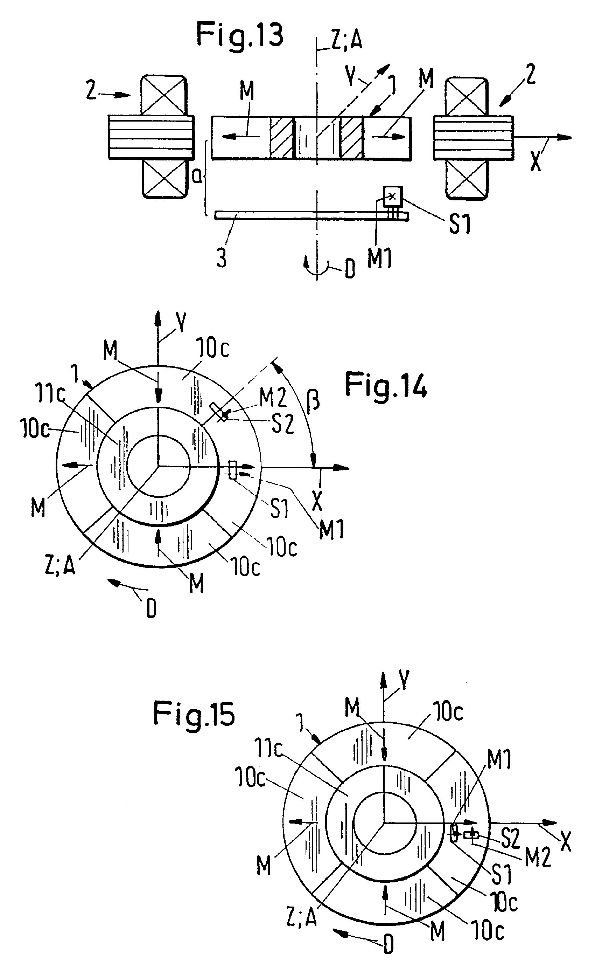

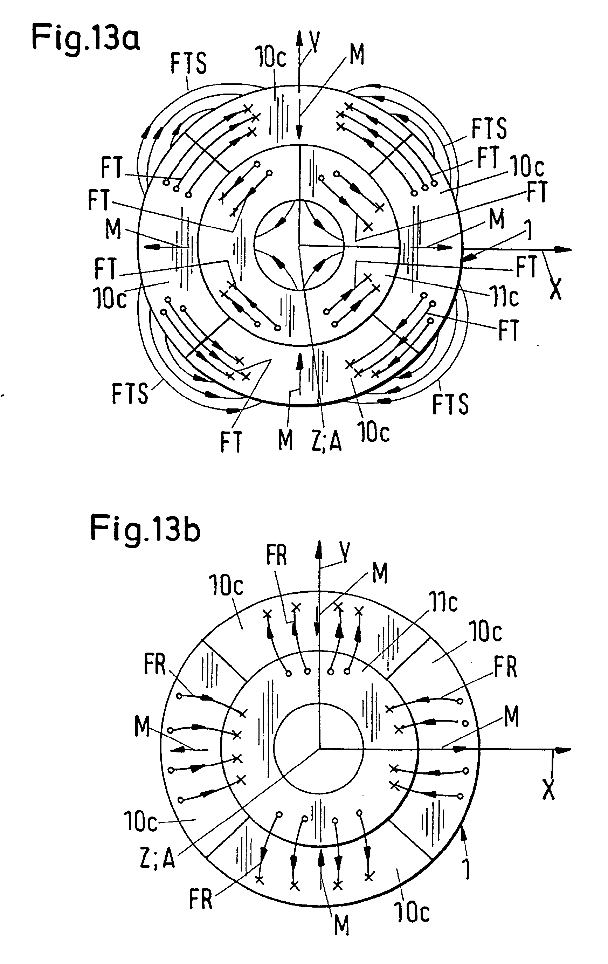

Fig. 12 zeigt eine Aufsicht auf ein zweites Ausführungsbeispiel der Erfindung, welches insbesondere für vierpolig (Polpaarzahl 2) magnetisierte Rotoren 1 geeignet ist. Auf die Darstellung des Stators 2 wurde in Fig. 12 verzichtet, es sind lediglich die Achsen des Statorsystems eingezeichnet. In Fig. 13 ist ein Schnitt entlang der Linie XIII-XIII durch das Ausführungsbeispiel gemäss Fig. 12 dargestellt, wobei zusätzlich der Stator 2 angedeutet ist. Der Rotor 1 ist als scheibenförmiger vierpolig blockförmig magnetisierter Rotor 1 gemäss der Ausgestaltung in Fig. 5 ausgebildet. Die jeweilige Magnetisierung der vier permanentmagnetischen Ringsegmenten 10c ist durch die Pfeile M angedeutet. Der Pfeil D zeigt die Drehrichtung des Rotors 1 an. Die zwei Sensoren S1, S2 zum Bestimmen des magnetischen Flusses sind auf dem gemeinsamen Chip oder Elektonikprint 3 montiert, und mit der nicht dargestellten Signalverarbeitungs- und Auswerteeinheit verbunden.

Zum besseren Verständnis ist in den Fig. 13a und 13b das Streufeld dieses vierpolig blockförmig magnetisierten Rotors 1 veranschaulicht. In Fig. 13a sind nur die tangential das heisst die in oder entgegen der Drehrichtung D verlaufenden Feldlinien FT, FTS des Streufelds eingezeichnet. Die Feldlinien FTS, die bezüglich der radialen Richtung ausserhalb des Rotors 1 eingezeichnet sind, verlaufen in der Zeichenebene und gehören zum radialen Streufeld des Rotors 1. Die ober- bzw. unterhalb des Rotors 1 eingezeichneten tangentialen Feldlinien FT treten jeweils an den mit den kleinen Kreisen markierten Stellen aus der Zeicheneben heraus und an den mit den kleinen Kreuzen markierten Stellen in die Zeichenebene ein. Diese Feldlinien FT repräsentieren den tangentialen Teilfluss des axialen Streufelds des Rotors 1. In Fig. 13b sind nur die radial verlaufenden Feldlinien FR des axialen Streufelds des Rotors 1 dargestellt. Diese treten wiederum an den mit den kleinen Kreisen markierten Stellen aus der Zeicheneben heraus und an den mit den kleinen Kreuzen markierten Stellen in die Zeichenebene ein.

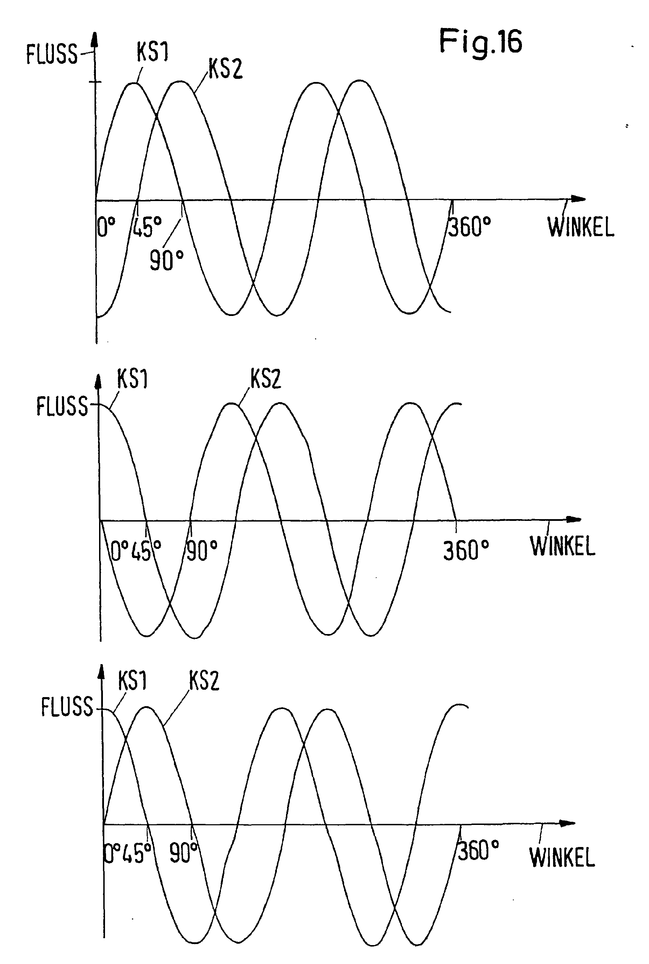

Die Sensoren S1, S2 sind bezüglich der axialen Richtung versetzt zum scheibenformigen Rotor 1 angeordnet, darstellungsgemäss (Fig. 13) unterhalb des Rotors 1, also ausserhalb des Raums zwischen dem Stator 2 und dem Rotor 1. Die Sensoren S1, S2 sind in einer gemeinsamen Messebene angeordnet, die parallel zur X-Y-Ebene des Statorsystems liegt und von dieser einen Abstand a hat. Beide Sensoren S1,S2 haben den gleichen radialen Abstand von der Z-Achse des Statorsystems und sind um einen Winkel $\beta$ bezüglich der Drehrichtung versetzt zueinander in der Messebene angeordnet. Bei diesem Ausführungsbeispiel ist der Winkel $\beta$ gleich 45°. Die Messrichtungen M1,M2 der Sensoren S1,S2 sind durch die Pfeile M1,M2 dargestellt. Wie dies insbesondere Fig. 12 zeigt, sind die Sensoren S1, S2 so angeordnet, dass sie jeweils den tangentialen, das heisst den in oder entgegen der Drehrichtung D gerichteten, Teilfluss des axialen Streufelds des Rotors 1 an ihrem jeweiligen Ort messen. Somit verlaufen beide Messrichtungen M1 und M2 jeweils senkrecht bezüglich der Soll-Drehachse A (Z-Achse des Statorsystems) und verlaufen unter dem Winkel $\beta$=45° relativ zueinander. Aus einem Vergleich mit den Fig. 13a und 13b ist zu erkennen, dass bei dieser Anordnung der Sensoren S1,S2 der eine Sensor gerade dann ein Maximum misst, wenn das Signal des anderen Sensors im wesentlichen Null ist (siehe Fig. 16, oben).

Aus den mittels der beiden Sensoren S1, S2 bestimmten Teilflüssen in den beiden verschiedenen, jeweils parallel zur X-Y-Ebene des Statorsystems liegenden Messrichtungen M1 und M2, lässt sich dann in sinngemäss gleicher Weise wie für das erste Ausführungsbeispiel beschrieben die momentane Lage bzw. Richtung der Rotormagnetisierung im Statorsystem bestimmen.

Fig. 14 zeigt in einer zu Fig. 12 analogen Darstellung eine Variante des zweiten Ausführungsbeispiels. Der Unterschied besteht darin, dass bei der Sensoranordnung gemäss Fig. 14 beide Sensoren S1, S2 jeweils den radialen Teilfluss des axialen Streufelds des Rotors 1 messen. Somit verlaufen beide Messrichtungen M1, M2 von der Z-Achse aus gesehen jeweils radial nach aussen. Da die Sensoren S1, S2 auch bei dieser Variante in der gemeinsamen Messebene um den Winkel β=45° bezüglich der Drehrichtung versetzt zueinander angeordnet sind, verlaufen die beiden Messrichtungen M1,M2 jeweils parallel zur X-Y-Ebene des Statorsystems und bilden einen Winkel von 45° miteinander. Aus einem Vergleich mit den Fig. 13a und 13b ist wiederum zu erkennen, dass auch bei dieser Anordnung der Sensoren S1,S2 der eine Sensor gerade dann ein Maximum misst, wenn das Signal des anderen Sensors im wesentlichen Null ist (siehe Fig. 16, Mitte).

In Fig. 15 ist in einer zur Fig. 12 analogen Darstellung eine weitere Variante der Sensoranordnung veranschaulicht. Gemäss dieser Variante sind die beiden Sensoren S1,S2 im wesentlichen am gleichen Ort axial versetzt zum Rotor 1 angeordnet, wobei der Sensor S1 den radialen Teilfluss des axialen Streufelds des Rotors 1 an diesem Ort misst und der Sensor 2 den tangentialen Teilfluss. Somit verlaufen die beiden Messrichtungen M1 und M2 wiederum jeweils parallel zur X-Y-Ebene des Statorsystems, bilden aber einen Winkel von 90°miteinander. Durch einen Vergleich mit den Fig. 13a, 13b ist zu erkennen, dass auch bei dieser Anordnung der Sensoren S1,S2 der eine Sensor gerade dann ein Maximum misst, wenn das Signal des anderen Sensors im wesentlichen Null ist, denn die Maxima des radialen Teilflusses fallen räumlich im wesentlichen mit den Minima des tangentialen Teilflusses zusammen und umgekehrt (siehe Fig. 16, unten).

Fig. 16 zeigt typische Verläufe der beiden mittels der Sensoren S1 und S2 ermittelten Teilflüsse für einen vierpolig blockförmig magnetisierten Rotor 1 bei einer Drehung des Rotors 1 um 360°. Die Kurven KS1 bzw. KS2 repräsentiern dabei jeweils das mittels des Sensors S1 bzw. S2 gemessene Signal. Die obere Darstellung ergibt sich für eine Sensoranordnung gemäss Fig. 13, die mittlere für eine Sensoranordnung gemäss Fig. 14 und die untere für eine Sensoranordnung gemäss Fig. 15. Es ist zu erkennen, dass für eine vierpolig blockförmige Magnetisierung des Rotors 1 die über eine Rotordrehung gemessenen Streuflüsse näherungsweise sinusförmig, aber zumindest sinusartig, verlaufen. Insbesondere ist der Verlauf dieser Kurven KS1, KS2 stetig veränderlich, das heisst es existieren keine "Plateaus", auf denen der Teilfluss über einen grösseren Winkelbereich konstant ist. Somit ist für jede beliebige Winkelstellung die Richtung der Rotormagnetisierung bezüglich des Statorsystems aus den beiden Teilflüssen bestimmbar. Durch die von den Sensoren S1, S2 erfassten Teilflüsse kennt man jeweils einen Punkt auf der Kurve KS1 und einen Punkt auf der Kurve KS2. Mit Hilfe dieser beiden Punkte und der bekannten Rotormagnetisierungsfunktion ist dann die Richtung der Rotormagnetisierung durch einer trigonometrische Analyse, z. B. mittels einer trigonometrischen Funktion höherer Ordnung, oder durch einen Vergleich mit einer gespeicherten elektronischen Nachschlagtabelle (look-up-table) ermittelbar.

Zusätzlich zu den hier explizit erläuterten Sensoranordnungen sind natürlich noch zahlreiche andere Anordnungen möglich, beispielsweise können die Sensoren S1,S2 in unterschiedlichen Abständen bezüglich der axialen Richtung vom Rotor 1 angeordnet sein, oder die Sensoren S1, S2 können auf verschiedenen Seiten des Rotors angeordnet sein, beispielsweise kann der Sensor S1 bezüglich der Darstellung in Fig. 7 bzw. 13 oberhalb und der Sensor 2 unterhalb des Rotors angeordnet werden.

Auch bezüglich des Winkels, unter dem die beiden Messrichtungen M1 und M2 zueinander verlaufen, sind zahlreiche Varianten möglich. Dieser Winkel ist jedoch vorzugsweise ungefähr 90°, falls sich die Sensoren S1 und S2 im wesentlichen am gleichen Ort befinden. Sofern beide Sensoren S1, S2 die gleiche Komponente des Streufelds an ihrem jeweiligen Ort messen, also beispielsweise beide Sensoren jeweils den tangentialen Teilfluss an ihrem Ort, oder beide Sensoren S1,S2 jeweils den radialen Teilfluss oder beide Sensoren S1,S2 jeweils den diametralen Teilfluss, sollte der Winkel zwischen den beiden Messrichtungen M1 und M2 ungleich einem ganzzahligen Vielfachen des Quotienten aus 180° und der Polpaarzahl des Rotors sein, also z. B. für einen vierpolig magnetisierten Rotor (Polpaarzahl zwei) ungleich 90°, 180°, 270°,.... Sind diese Bedingungennämlich nicht erfüllt, so existieren bestimmte Rotorwinkel, für die beide Sensoren S1,S2 gleichzeitig in einem Nulldurchgang des von ihnen erfassten Teilflusses liegen, sodass für diese Rotorwinkel die Lage der Rotormagnetisierung nicht bestimmbar ist. Im Hinblick auf eine besonders zuverlässige und einfache Verarbeitung und Auswertung der Sensorsignale sind solche Anordnungen der Sensoren S1, S2 bevorzugt, bei welchen die erste und die zweite Messrichtung M1,M2 unter einem Winkel zueinander verlaufen, der gleich dem Ouotienten aus 90° und der Polpaarzahl des Rotors 1 bzw. einem ungeradzahligen Vielfachen diese Quotienten ist. Solche Anordnungen sind beispielsweise in den Fig. 7 und 12 gezeigt.

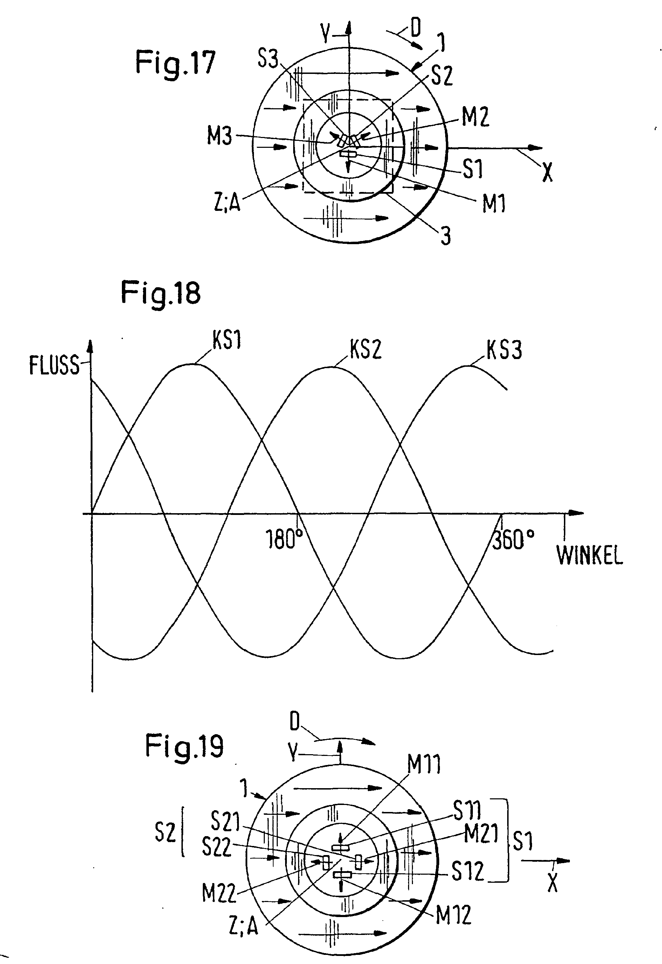

Eine weitere vorteilhafte Massnahme besteht darin, mindestens einen weiteren Sensor S3 (siehe Fig. 17) vorzusehen, also insgesamt mindestens drei Sensoren S1,S2,S3, wobei der Sensor S3 so angeordnet ist, dass mit ihm der Teilfluss des magnetischen Flusses des axialen Steufelds des Rotors in einer weiteren Messrichtung M3 bestimmbar ist, die von der ersten und der zweiten Messrichtung M1, M2 verschieden ist. Eine derartige Variante des Ausführungsbeispiels gemäss der Fig. 6 und 7 ist in der Fig. 17 dargestellt. Die drei Sensoren S1,S2,S3 sind auf einem gemeinsamen Bauteil, beispielsweise einem Chip oder Elektronikprint 3, angeordnet, das wiederum in einem nicht dargestellten Gehäuse untergebracht sein kann. Alle drei Sensoren S1,S2,S3 liegen in der gleichen Messebene, die sich parallel zur X-Y-Ebene des Statorsystems erstreckt und bezüglich der axialen Richtung versetzt zum Rotor 1 liegt. Die Sensoren S1,S2,S3 sind jeweils so ausgerichtet, dass mit ihnen der radiale Teilfluss des axialen Streufelds des Rotors 1 an ihrem jeweiligen Ort bestimmbar ist. In der gemeinsamen Messebene sind die Sensoren so an verschiedenen Orten angeordnet, dass die drei zugehörigen Messrichtungen M1,M2,M3 gleichmässig über 360° verteilt sind, das heisst der Winkel zwischen der ersten Messrichtung M1 und der zweiten Messrichtung M2 ist gleich gross wie der Winkel zwischen der zweiten und der dritten Messrichtung M2,M3 und gleichgross wie der Winkel zwischen der dritten und der ersten Messrichtung M3,M1, nämlich 120°. Auch hier liegen alle drei Messrichtungen M1,M2,M3 parallel zur X-Y-Ebene des Statorsystems.

In Fig 18 ist ein typischer Verlauf der mittels der Sensoren S1,S2,S3 bestimmten Teilflüsse - repräsentiert durch die Kurven KS1,KS2 bzw.KS3 - für einen zweipolig magnetisierten Rotor 1 bei einer Drehung des Rotors um 360° dargestellt. Der Vorteil dieser Massnahme, einen oder gegebenenfalls mehrere weitere Sensoren S3 vorzusehen, liegt darin, dass eine Redundanz bzw. eine Fehlertoleranz realisiert werden kann, weil sich die Lage der Rotormagnetisierung im Statorsystem bereits aus zwei der drei Signale ermitteln lässt. Es versteht sich, dass diese Massnahme auch für andere Rotormagnetisierungsfunktionen und höhere Polpaarzahlen anwendbar ist.

Gemäss einer weiteren vorteilhaften Variante (siehe Fig. 19) umfasst jeder Sensor S1,S2 jeweils zwei Sensorelemente S11,S12 bzw. S21,S22 die bezüglich der Soll-Drehachse A bzw. der Z-Achse um 180° in Drehrichtung versetzt zueinander angeordnet sind. Eine solche Variante ist für das in Fig. 6 gezeigte Ausführungsbeispiel in Fig. 19 dargestellt. Die beiden Sensorelemente S11 und S12 mit den Messrichtungen M11 und M12 gehören zum Sensor S1, die beiden Sensorelemente S21 und S22 mit den Messrichtungen M21 und M22 gehören zum Sensor S2. Alle Sensorelemente S11,S12,S21,S22 sind in der gemeinsamen Messebene angeordnet, die parallel zur X-Y-Ebene des Statorsystems liegt. Die zum gleichen Sensor S1 bzw. S2 gehörenden Sensorelemente S11,S12 bzw. S21,S22 sind bezüglich der Z-Achse diametral gegenüberliegend angeordnet. Alle Messrichtungen M11,M12,M21,M22 verlaufen radial nach aussen. Mit einer derartigen Anordnung können systematische Fehler, wie Offsett-Spannungen, thermische Driften und Common-Mode Störungen kompensiert werden, beispielsweise indem jeweils das Differenzsignal der beiden zum gleichen Sensor gehörenden Sensorelemente zur Bestimmung der Richtung der Rotormagnetisierung herangezogen wird.

Auch ist es vorteilhaft, Streufelder, welche von den elektrischen Wicklungen 22 des Stators 2, also beispielsweise von der Antriebs- oder der Steuerwicklung, erzeugt werden, zu kompensieren. Diese Streufelder sind im allgemeinen proportional zu den Antriebsströmen beziehungsweise zu den Steuerströmen in den elektrischen Wicklungen des Stators 2. Somit können diese Streufelder in einer Art Kalibrierungsmessung ermittelt werden, bei welcher sich der Rotor 1 nicht im Stator 2 befindet. Die bei einer solchen Kalibrierungsmessung mit Hilfe der Sensoren S1,S2 ermittelten Streufelder des Stators 2 können in einem Speicher, beispielsweise einem EPROM, abgelegt werden. Beim Beteib des lagerlosen Motors (mit Rotor 1) können dann die vom Stator verursachten Streufelder rechnerisch anhand der gespeicherten Daten kompensiert werden.

Ein besonderer Vorteil der erfindungsgemässen Anordnung bzw. des erfindungsgemässen Verfahrens liegt darin, dass zusätzlich zur Richtung der Rotormagnetisierung im Statorsytem auch die axiale Position des Rotors 1 bezüglich des Stators 2 bestimmt werden kann, ohne dass hierfür weitere Sensoren benötigt werden. Die Starke des magnetischen Streufelds des Rotors ist nämlich auch vom axialen Abstand vom Rotor 1 abhängig. Dieser Zusammenhang zwischen der Starke des Streufelds und dem axialen Abstand vom Rotor 1 ist naturlich von der speziellen Konstruktion des Rotors 1, z. B. der Geometrie des Magneten 10,10a bzw. der Magnetsegmente 10b,10c und des Eisenrückschlusses 11,11a,11b,11c, dem Magnetmaterial, dem Sättigungsgrad des Eisens und der Polpaarzahl, abhängig, kann aber für jeden Rotor 1 messtechnisch erfasst werden und in einer elektronischen Nachschlagtabelle (look-up-table) abgespeichert werden. Beim Betrieb des lagerlosen Motors kann dann mit Hilfe dieser elektronischen Nachschlagtabelle die axiale Position des Rotors 1 aus den Teilflüssen, die mittels der Sensoren S1,S2 bestimmt werden, ermittelt werden.

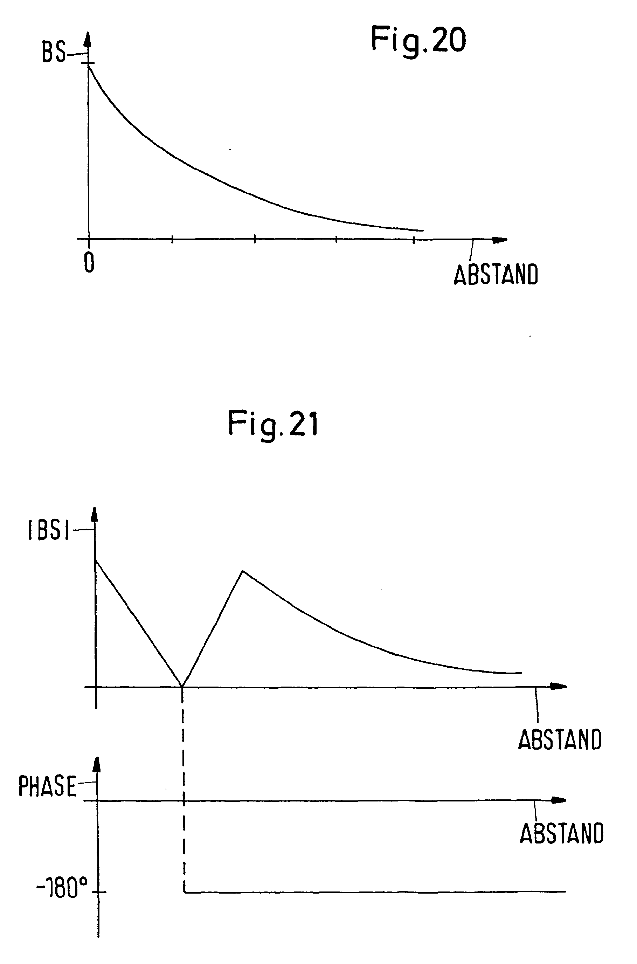

Als ein erstes Beispiel zeigt Fig. 20 die Amplitude BS des axialen Streufelds für eine diametral magnetisierte permanentmagnetische Scheibe 10a (siehe Fig. 2) aus NdFeB als Funktion des Abstands vom Rotor 1. Dieser eindeutige Zusammenhang ist beispielsweise in der Nachschlagtabelle gespeichert. Beim Betrieb des lagerlosen Motors lässt sich die Amplitude bzw. der Betrag des axialen Streufelds des Rotors 1 aus den mittels der beiden Sensoren S1,S2 bestimmten Teilflüssen ermitteln. Da die ortsfeste Position der beiden Sensoren bezüglich der Z-Achse des Statorsystems bekannt ist, kann somit durch einen Vergleich der messtechnisch ermittelten Amplitude des axialen Streufelds des Rotors 1 mit der gespeicherten Nachschlagtabelle die momentane axiale Position des Rotors 1 bezüglich des Statorsystems eindeutig bestimmt werden.

Als zweites Beispiel zeigt Fig. 21 den Betrag |BS| (oben) und die Phase (unten) des axialen Streufelds für einen diametral magnetisierten permanentmagnetischen Ring 10 aus NdFeB mit Eisenrückschluss 11 (siehe Fig. 3) als Funktion des axialen Abstands vom Rotor 1. Das zugehörige axiale Streufeld entspricht dem in Fig. 9 dargestellten. Wie dies Fig. 21 zeigt, nimmt der Betrag zunächst mit zunehmendem Abstand ab bis er zu Null wird, nimmt dann wieder zu, erreicht ein Maximum und nimmt dann mit dem Abstand ständig ab. Das Maximum liegt etwa bei einem Viertel des äusseren Durchmessers des permanentmagnetischen Rings 10. Der Phasenverlauf (Fig. 21, unten) zeigt einen Sprung um 180° beim Minimum des Betrags, was einem Vorzeichenwechsel entspricht.

Bei einem vierpolig magnetisierten Rotor 1 und einer Anordnung der Sensoren S1,S2 gemäss einer der Fig. 12, 14, 15 hat der Verlauf der Amplitude bzw. des Betrags des axialen Streufelds des Rotors qualitativ ebenfalls die in Fig. 21 dargestellte Abhängigkeit. Werden nun die Sensoren S1,S2 in einem solchen Abstand vom Rotor 1 angeordnet bzw. der Abstand a der gemeinsamen Messebene so gross gewählt, dass sich die Sensoren S1 und S2 jenseits des Maximums (siehe Fig. 21, oben) befinden, so besteht ein eindeutiger Zusammenhang zwischen der Amplitude der beiden ermittelten Teilflüsse und der axialen Position des Rotors. Aus den beiden Teilflüssen kann somit neben der Richtung der Rotormagnetisierung auch die axiale Position des Rotors 1 bestimmt werden, beispielsweise mittels einer elektronisch gespeicherten Nachschlagtabelle für den Zusammenhang zwischen den Sensoramplituden und der axialen Position des Rotors 1.

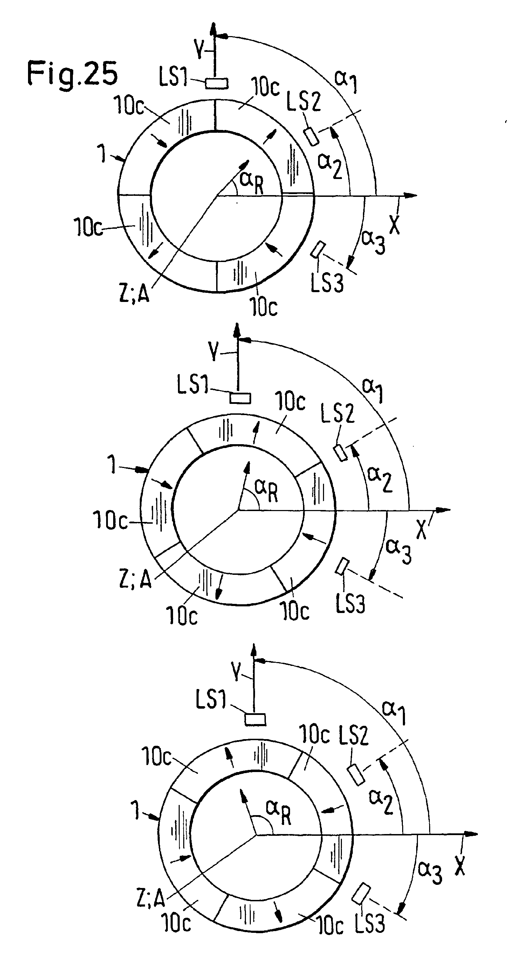

Gemäss einer bevorzugten Weiterentwicklung der erfindungsgemässen Sensoranordnung bzw. des erfindungsgemässen Verfahrens sind ferner mindestens zwei Lagesensoren LS1,LS2 (siehe Fig. 25) zur Bestimmung der radialen Position des Rotors 1 bezüglich des Stators 2 vorgesehen. Die Lagesensoren sind dann so angeordnet, dass mit ihnen der magnetische Fluss im Raum zwischen dem Rotor 1 und dem Stator 2 an zwei unterschiedlichen Messorten bestimmbar ist. Mit einer solchen Anordnung ist neben der Richtung der Rotormagnetisierung und der axialen Position des Rotors 1 auch dessen radiale Position im Stator 2 bestimmbar.

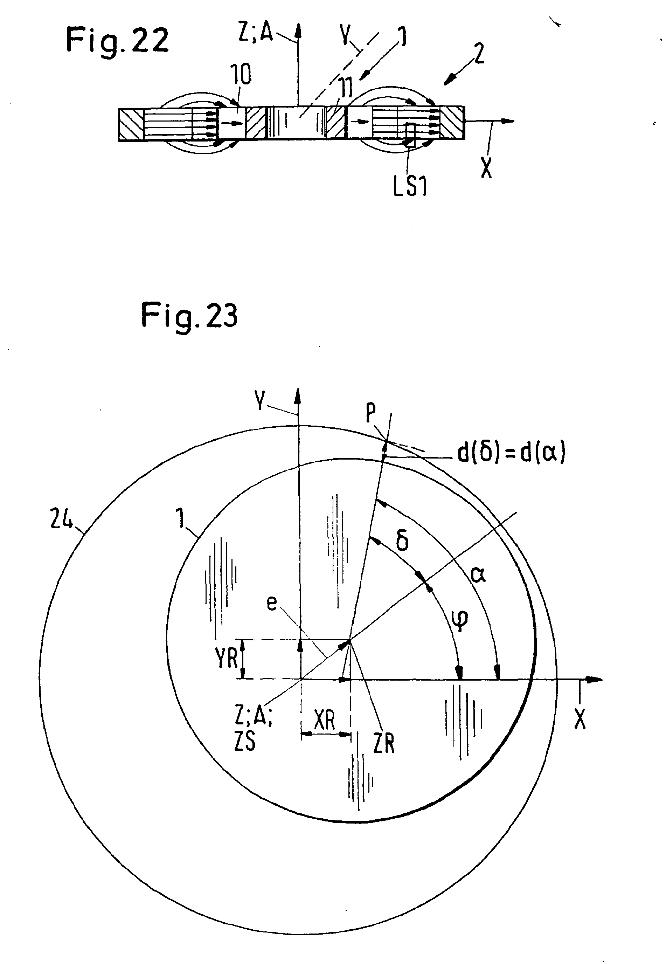

Als Lagesensoren LS1,LS2 können alle an sich bekannten Sensoren zum Bestimmen eines magnetischen Flusses, wie z. B. Magnetfeldsonden, Hall-Sensoren, magnetoresistive Sonden oder Giant-Magneto-Resistive (GMR) - Sensoren verwendet werden. Die Lagesensoren LS1,LS2 können entweder ganz im Raum zwischen dem Rotor 1 und dem Stator 2 liegen, also z. B. in der X-Y-Ebene des Statorsystems, oder aber auch axial versetzt bezüglich dieser Ebene, beispielsweise so, dass sie teilweise in axialer Richtung aus dem Stator 2 bzw. dem Luftspalt herausragen. Eine solche Anordnung ist in Fig. 22 dargestellt, die einen Schnitt durch ein Ausführungsbeispiel mit Lagesensoren LS1, LS2 zeigt. In dieser Schnittdarstellung ist nur ein Lagesensor LS1 erkennbar (vergleiche auch Fig. 25).

Vorzugsweise sind die Lagesensoren LS1,LS2 jeweils in einer Lücke 21 (Fig. 1) zwischen zwei benachbarten Statorzähnen 20 angeordnet, weil durch diese Massnahme der durch die Statorzähne 20 fliessende magnetische Steuerfluss zur Steuerung der Rotorposition von den Lagesensoren LS1,LS2 nicht mitgemessen wird. Prinzipiell ist es natürlich auch möglich, die Lagesensoren LS1, LS2 jeweils auf dem radial inneren Ende eines Statorzahns 20 anzubringen.

Die Bestimmung der radialen Position des Rotors 1 im Stator 2 erfolgt mit Hilfe der folgenden Grössen: magnetische Flussverteilung im Luftspalt bei zentrischem Rotor, Richtung der Rotormagnetisierung im Statorsystem, magnetischer Fluss an den beiden Messorten, der mittels der beiden Lagesensoren LS1, LS2 bestimmbar ist. Bevor nun näher erläutert wird, wie die Bestimmung der radialen Position des Rotors 1 beispielsweise erfolgen kann, werden zunächst anhand von Fig. 23 einige Grössen festgelegt bzw. erklärt. Da es für das Verständnis ausreicht, wird für das Folgende der Einfachheit halber davon ausgegangen, dass der Rotor 1 bezüglich der axialen Richtung nicht ausgelenkt ist, sich also in der X-Y-Ebene des Statorsystems befindet. Eine eventuell vorhandene Auslenkung des Rotors 1 in axialer Richtung, die wie vorne erläutert mit der Sensoranordnung messbar ist, kann jedoch in einfacher Weise berücksichtigt werden.

In Fig. 23 ist der Rotor 1 durch die innere Kreislinie dargestellt. Die äussere Kreislinie repräsentiert die radial äussere Begrenzung 24 des Luftspalts zwischen dem Rotor 1 einerseits und den in Fig. 23 nicht dargestellten Statorzähnen 20 andererseits, das heisst die Statorzähne 20 reichen von aussen kommend bis an die radial äussere Begrenzung 24 des Luftspalts.

Fig. 23 zeigt den Rotor 1 in einer exzentrischen Position. Mit ZS ist das Zentrum des Stators 2 bezeichnet, also der Ursprung des Statorsystems mit den Koordinatenachsen X,Y,Z. Die Z-Achse steht senkrecht auf der Zeichenebene. ZR bezeichnet das Zentrum des Rotors 1, also den Ursprung des Rotorsystems. Falls der Rotor bezüglich seiner radialen Position zentriert ist, fallen ZS und ZR zusammen. Der Verbindungspfeil zwischen ZS und ZR beschreibt die radiale Auslenkung des Rotors 1 aus seiner zentrierten Position. Der Betrag der Auslenkung, also die Länge des Verbindungspfeils, ist mit e bezeichnet, der Winkel zwischen der Auslenkung des Rotors 1 und der X-Achse des Statorsystems mit $\varphi$. Die Auslenkung hat im Statorsystem die kartesischen Koordinaten XR und YR. Dies sind natürlich auch die kartesischen Koordinaten des Zentrums des Rotors ZR bzw. des Ursprungs des Rotorsystems gemessen im Statorsystem.

Mit d wird der Abstand des Rotors 1 von der radial äusseren Begrenzung 24, also die Breite des Luftspalts bezeichnet. Der Abstand d ist bei einer exzentrischen Lages des Rotors 1 natürlich winkelabhängig. Als Laufvariable für den Winkel dienen die beiden Winkelkoordinaten $\alpha$ und $\delta$. Ist P ein beliebiger Aufpunkt auf der radial äusseren Begrenzung 24, so gibt $\delta$ den Winkel zwischen der Verbindungslinie dieses Aufpunkts P mit dem Zentrum des Rotors ZR und der durch den Winkel $\varphi$ beschrieben Richtung der Auslenkung an; $\alpha$ gibt den Winkel zwischen genannter Verbindungslinie und der X-Achse des Statorsystems an. Da für alle praxisrelevanten Fälle die Auslenkung e sehr klein ist, gilt in sehr guter Näherung $\alpha = \varphi + \delta$. Der Fehler dieser Näherung ist in der Praxis typischerweise kleiner als 0.1°. Das heisst, in guter Näherung ist $\alpha$ der Polarwinkel des Aufpunkts P in der X-Y-Ebene des Statorsystems gemessen gegen die X-Achse. Der Abstand zwischen dem Rotor 1 und dem Aufpunkt P auf der radial äusseren Begrenzung 24 wird mit $d(\alpha)$ bzw. $d(\delta)$ bezeichnet. Mit $d_0$ wird die winkelunabhängige Breite des Luftspalts für den zentrierten Rotor 1 bezeichnet, also für den Fall ZR=ZS. Für den Abstand $d(\alpha)$ bzw. $d(\delta)$ gilt die folgende Beziehung:

$$d(\alpha) = d_0 - e \cdot \cos(\alpha-\varphi) \qquad \text{bzw.} \qquad d(\delta) = d_0 - e \cdot \cos(\delta)$$

Die magnetische Flussverteilung im Luftspalt zwischen Rotor 1 und Stator 2 bei zentriertem Rotor 1, das heisst bei der Auslenkung e=0, kann durch eine Flussverteilungsfunktion:

$$B_0(\alpha) = B_0{}^* \cdot f(\alpha)$$

beschrieben werden, wobei $B_0^*$ die Amplitude bezeichnet und $f(\alpha)$ eine Winkelfunktion von $\alpha$. Der Index "0" zeigt an, dass diese Flussverteilungsfunktion für den zentrierten Rotor 1 gilt. Diese Flussverteilungsfunktion $B_0(\alpha)$ kann aus der Rotormagnetisierungsfunktion und dem Rotorwinkel, der mit $\alpha_R$ bezeichnet wird, bzw. der Richtung der Rotormagnetisierung im Statorsystem bestimmt werden. Die Rotormagentisierungsfunktion ist bekannt und der Rotorwinkel $\alpha_R$ bzw. die Richtung der Rotormagnetisierung im Statorsystem kann wie weiter vorne erläutert mittels einer erfindungsgemässen Sensoranordnung ermittelt werden, sodass dann auch die Flussverteilungsfunktion $B_0(\alpha)$ bestimmbar ist. Eine eventuell vorhandene Auslenkung des Rotors 1 bezüglich der axialen Richtung kann bei der Bestimmung von $B_0(\alpha)$ berücksichtigt werden.

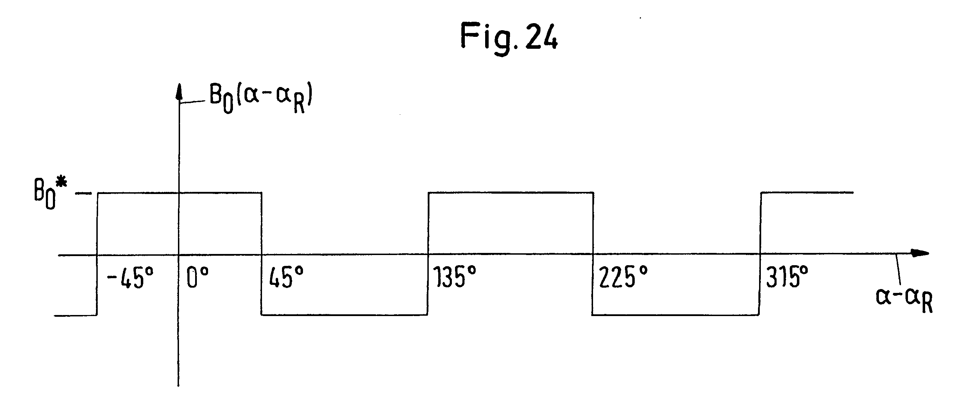

Als Beispiel für eine Flussverteilungsfunktion $B_0(\alpha)$ im Luftspalt bei zentriertem Rotor 1 zeigt Fig. 24 eine solche Flussverteilungsfunktion $B_0(\alpha-\alpha_R)$ für einen vierpolig, blockförmig magnetisierten Rotor 1 (siehe Fig. 5) als Funktion der Winkeldifferenz $(\alpha-\alpha_R)$, wobei $\alpha_R$ der gegen die X-Achse gemessenen Rotorwinkel ist. Der Einfluss der Nutung des Stators mittels der Statorzähne 20 und der Lücken 21 ist dabei aus Gründen der besseren Übersichtlichkeit nicht berücksichtigt.

Die Flussverteilung im Luftspalt für den exzentrischen Rotor 1 mit der Auslenkung e wird durch eine Flussverteilungsfunktion $B_e(\alpha)$ beschrieben. Für diese gilt:

$$B_e(\alpha) = B_0(\alpha) \cdot d_0/d(\alpha)$$

Mit einer dimensionslosen Exzentrität $\varepsilon = e/d_0$ ergibt sich:

$$B_e(\alpha) = B_0(\alpha) \, / \, [1 - \varepsilon \cdot \cos(\alpha-\varphi)]$$

Für $\varepsilon \ll 1$ gilt aufgrund einer Reihenentwicklung:

$$B_e(\alpha) \, / \, B_0(\alpha) \approx 1 + \varepsilon \cdot \cos(\alpha-\varphi)$$

Die beiden Lagesensoren LS1,LS2 sind im Statorsystem an Orten platziert, die durch die Polarwinkel $\alpha_1$ und $\alpha_2$ beschrieben werden (siehe Fig. 25), das heisst, die beiden unterschiedenen Messorte sind durch die Winkel $\alpha_1$ und $\alpha_2$ festgelegt. Somit ist aufgrund der von den Lagesensoren LS1 und LS2 erfassten Signale der Wert der Flussverteillungsfunktion $B_e(\alpha)$ für die beiden Winkel $\alpha_1$ und $\alpha_2$, nämlich $B_e(\alpha_1)$ und $B_e(\alpha_2)$, bekannt. Wie bereits erläutert kann ferner die Flussverteilungsfunktion $B_0(\alpha)$ für den zentrierten Rotor 1 bestimmt werden, sodass auch die Werte dieser Funktion für die Winkel $\alpha_1$ und $\alpha_2$, nämlich $B_0(\alpha_1)$ und $B_0(\alpha_2)$, ermittelt werden können. Somit resultieren die beiden Bestimmungsgleichungen,

$$\varepsilon \cdot \cos(\alpha_1-\varphi) = [B_e(\alpha_1)/B_0(\alpha_1)] - 1 \qquad \text{und} \qquad \varepsilon \cdot \cos(\alpha_2-\varphi) = [B_e(\alpha_2)/B_0(\alpha_2)] - 1$$

mit denen die beiden unbekannten Grössen $\varepsilon$ und $\varphi$ berechnet werden können.

Somit sind die beiden kartesischen Koordinaten XR und YR der Auslenkung und damit die Lage des Zentrums ZR des Rotors 1 bekannt:

$$XR = d_0 \cdot \varepsilon \cdot \cos(\varphi) \qquad \text{und} \qquad YR = d_0 \cdot \varepsilon \cdot \sin(\varphi)$$

Folglich ist die radiale Position des Rotors 1 bezüglich des Statorsystems bekannt.

Eine besonders einfache Auswertung der Bestimmungsgleichungen resultiert für den Fall $\alpha_1 = 0°$ und $\alpha_2 = 90°$, das heisst, wenn der erste Messort auf der X-Achse und der zweite Messort auf der Y-Achse des Statorsystems liegt.

Gemäss einer bevorzugten Ausführungsform sind mindesten drei Lagesensoren LS1, LS2, LS3 vorgesehen, mit denen der magnetische Fluss im Raum zwischen dem Rotor 1 und dem Stator 2 an drei unterschiedlichen Messorten bestimmbar ist. Die Positionen der Lagesensoren LS1, LS2, LS3 bzw. die Messorte werden durch die Winkel $\alpha_1$, $\alpha_2$, $\alpha_3$ beschrieben.

Durch das Vorsehen eines dritten Lagesensors LS3 kann der folgenden Schwierigkeit entgegengewirkt werden: In der Praxis realisierte Rotormagnetisierungsfunktionen, z. B. sinusförmige, blockförmige oder trapezförmige, und damit auch die Flussverteilungsfunktionen, weisen oftmals einen oder mehrere Nulldurchgänge auf. Liegt nun ein solcher Nulldurchgang gerade bei der gleichen Winkellage wie einer der Lagesensoren, beispielsweise bei $\alpha_1$, - was bei drehendem Rotor regelmässig zutrifft - so bleibt in der entsprechenden Bestimmungsgleichung der Ausdruck $B_e(\alpha_1)/B_0(\alpha_1)$ unbestimmt, sodass die Grössen $\varepsilon$ und $\varphi$ für diesen Rotorwinkel nicht mehr eindeutig bestimmt werden können.

Deshalb werden drei Lagesensoren LS1, LS2, LS3 vorgesehen, die derart angeordnet sind, dass für jede Drehwinkelstellung des Rotors, also für jeden Rotorwinkel $\alpha_R$, die Winkellage $\alpha_1$, $\alpha_2$, $\alpha_3$ von mindestens zwei Messorten von der Winkellage der Nulldurchgänge verschieden ist. Die Winkel zwischen den einzelnen Messorten werden also derart gewählt, dass bei keiner Stellung des Rotors 1 mehr als ein Nulldurchgang der Rotormagnetisierung bzw. der Flussverteilungsfunktion mit einem Messort übereinstimmt.

Aufgrund des dritten Lagesensors LS3 bzw. des dritten Messorts, der durch den Winkel $\alpha_3$ beschrieben wird, erhält man eine dritte Bestimmungsgleichung:

$$\varepsilon \cdot \cos(\alpha_3 - \varphi) = [B_e(\alpha_3)/B_0(\alpha_3)] - 1$$

Wegen der vorangehend genannten Anordnung der Lagesensoren LS1, LS2, LS3 sind immer mindestens zwei der drei Bestimmungsgleichungen auswertbar, sodass die Grössen $\varepsilon$ und $\varphi$ für jeden beliebigen Rotorwinkel $\alpha_R$ eindeutig mit Hilfe dieser drei Lagesensoren LS1, LS2, LS3 bestimmbar sind und somit auch die radiale Position des Zentrums ZR des Rotors 1.

In der Praxis geht man vorteilhafterweise so vor, dass man jeweils die beiden Bestimmungsgleichungen zur Auswertung heranzieht, bei denen der Betrag von $B_e(\alpha)$ oder $B_0(\alpha)$ am grössten ist.

Falls alle drei Lagesensoren LS1, LS2 und LS3 ein ausreichen starkes Signal ergeben, so ist das System der drei Bestimmungsgleichungen überbestimmt. Dieser Zustand kann vorteilhaft zum Abgleichen der drei Lagesensoren LS1, LS2, LS3, beispielsweise für einen Offset-Abgleich, oder zur Kompensation anderer systematischer Fehler, wie z. B. Temperaturdriften, verwendet werden.

Die Anordnung der drei Lagesensoren LS1, LS2, LS3 wird nun noch anhand des konkreten Beispiels eines vierpolig, blockförmig magnetisierten Rotors 1 (siehe Fig. 5) veranschaulicht. Die zugehörige Flussverteilungsfunktion im Luftspalt für den zentrierten Rotor 1 ist in Fig. 24 dargestellt. Die Messorte, beschrieben durch die Winkel $\alpha_1$, $\alpha_2$, $\alpha_3$ sind nun so zu wählen, dass für keinen Rotorwinkel $\alpha_R$ mehr als einer der Funktionswerte $B_0(\alpha_1)$, $B_0(\alpha_2)$, $B_0(\alpha_3)$ einem Nulldurchgang entspricht. Diese Bedingung ist erfüllt, falls keiner der Lagesensoren LS1, LS2, LS3 um einen Winkel von $k \cdot 90°$ (mit $k = 0, \pm1, \pm2, \pm\ldots$) bezüglich eines anderen Lagesensors versetzt angeordnet ist. Folglich muss die Differenz $\alpha_i - \alpha_j$ für alle $i,j = 1,2,3$ und $i \neq j$ verschieden von $k \cdot 90°$ sein.

In der Praxis sind die senkrechten Flanken in der Funktion $B_0(\alpha - \alpha_R)$ bei $\alpha - \alpha_R = 45° \pm k \cdot 90°$ ($k = 0, \pm1, \pm2, \pm\ldots$) wie sie Fig. 24 zeigt über einen endlichen Winkelbereich "verschmiert", der durch einen Winkel $\pm\alpha_S$ um die theoretische Flanke herum beschrieben werden kann. Deshalb ist es für die Praxis vorteilhaft, die Lagesensoren LS1, LS2, LS3 so anzuordnen, dass für jeden Rotorwinkel $\alpha_R$ die Winkellage von mindestens zwei Messorten ausserhalb dieses Bereichs von $\pm\alpha_S$ um die Nulldurchgänge der Rotormagnetisierung bzw. der Flussverteilungsfunktion liegt. Die Grösse von $\alpha_S$ hängt natürlich von der konkreten Ausgestaltung des Rotors 1 ab. Im hier beschriebenen Beispiel beträgt sie beispielsweise etwa 10°.

Unter Berücksichtigung dieser Verschmierung werden die Lagesensoren LS1, LS2, LS3 bei dem hier beschriebenen Beispiel deshalb vorzugsweise so angeordnet, dass für die Winkel $\alpha_1$, $\alpha_2$, $\alpha_3$ der drei Messorte die folgende Beziehung gilt:

$$k \cdot 90° + \alpha_S < |\alpha_i - \alpha_j| < (k+1) \cdot 90° - \alpha_S$$

mit: $i, j = 1, 2, 3$; $i \neq j$; $k = 0, \pm 1, \pm 2, \pm \ldots$

Ansonsten sind die Winkel $\alpha_1$, $\alpha_2$, $\alpha_3$ prinzipiell beliebig wählbar.

Es ist besonders vorteilhaft, auch im Hinblick auf eine einfache Auswertung, wenn die Lagesensoren LS1, LS2, LS3 so angeordnet sind, dass die Beträge der Winkeldifferenzen $|\alpha_i - \alpha_j|$ jeweils gleich einem ganzzahligen Vielfachen von 60° sind. Eine solche Anordnung ist in Fig. 25 für den vierpolig, blockförmig magnetisierten Rotor 1 gezeigt. Bei diesem Beispiel der Anordnung ist $\alpha_1 = 90°$, $\alpha_2 = 30°$ und $\alpha_3 = -30°$. Die Nulldurchgänge der Rotormagnetisierungsfunktion bzw. der Flussverteilungsfunktion liegen jeweils bei der Trennfläche zwischen zwei benachbarten permanentmagnetischen Ringsegmenten 10c. Fig. 25 zeigt in der oberen Abbildung den Fall, dass der Lagesensor LS1 bei einem Nulldurchgang liegt, was für Rotorwinkel $\alpha_R = \alpha_1 + 45° + k \cdot 90°$ der Fall ist. In der mittleren Abbildung liegt der Lagesensor LS2 bei einem Nulldurchgang, was für Rotorwinkel $\alpha$ $\alpha_R = \alpha_2 + 45° + k \cdot 90°$ der Fall ist. In der unteren Abbildung liegt der Lagesensor LS3 bei einem Nulldurchgang, was für Rotorwinkel $\alpha_R = \alpha_3 + 45° + k \cdot 90°$ der Fall ist. Es ist zu erkennen, dass in allen Fällen jeweils zwei der Lagesensoren LS1, LS2 oder LS3 deutlich von den Nulldurchgängen entfernt sind, sodass immer mindestens zwei der Lagesensoren LS1, LS2, LS3 ein auswertbares Signal liefern. Somit ist für jeden beliebigen Rotorwinkel $\alpha_R$ die radiale Position des Rotors 1 bezüglich der X-Y-Ebene des Statorsystems bestimmbar.

Aus sinngemäss gleichen Gründen, wie sie bereits vorne im Zusammenhang mit den Sensoren S1, S2, S3 erläutert wurden, ist es auch bezüglich der Lagesensoren LS1, LS2, LS3 eine vorteilhafte Massnahme, wenn jeder Lagesensor LS1, LS2, LS3 jeweils zwei Lagesensorelemente umfasst, die bezüglich der Soll-Drehachse A des Rotors bzw. der Z-Achse des Statorsystems um 180° in Drehrichtung des Rotors versetzt zueinander angeordnet sind. Das heisst der Lagesensor, der bei dem Winkel $\alpha_i$ ($i = 1, 2, 3$) angeordnet ist, umfasst zwei Lagesensorelemente, wobei das eine bei dem Winkel $\alpha_i$ angeordnet ist und das andere bei dem Winkel $\alpha_i + 180°$. Durch diese paarweise gegenüberliegende Anordnung der Lagesensorelemente lassen sich auch hier systematische Fehler, wie z.B. Offsets oder thermische Driften, kompensieren. Ferner ist es möglich, durch Anordnungen mit mehr als drei Lagesensoren eine Redundanz bzw. eine Fehlertoleranz zu erzielen.

Es versteht sich, dass die erfindungsgemässe Sensoranordnung natürlich auch mehr als drei Lagesensoren LS1, LS2, LS3 und/oder mehr als drei Sensoren S1, S2, S3 zum Erfassen des Streufelds des Rotors umfassen kann, bzw. das erfindungsgemässe Verfahren mit mehr als drei Lagesensoren LS1, LS2, LS3 und/oder mehr als drei Sensoren S1, S2, S3 durchgeführt werden kann.

Natürlich ist die erfindungsgemässe Sensoranordnung bzw. das erfindungsgemässe Verfahren nicht auf die hier expliziet beschriebenen Formen der Rotormagnetiesierung beschränkt. Sie sind insbesondere auch für permanentmagnetischen Rotoren mit höheren Polpaarzahlen und/oder anderen Formen der Magnetisierung geeignet.

**Patentansprüche**

1. Elektromagnetischer Drehantrieb, der als lagerloser Motor mit einem magnetisch gelagerten, permanentmagnetischen Rotor (1) und einem Stator (2) ausgestaltet ist, wobei der Stator (2) als Lager- und Antriebsstator ausgestaltet ist und der Drehantrieb keine separaten Magnet Lager für den Rotor aufweist, umfassend eine Sensoranordnung zur Bestimmung der Richtung der Rotormagnetisierung und/oder der axialen Position des Rotors (1), welche Sensoranordnung mindestens zwei Sensoren (S1, S2, S3) zum Bestimmen eines magnetischen Flusses umfasst, **dadurch gekennzeichnet, dass** die beiden Sensoren (S1, S2, S3) derart bezüglich des Rotors (1) angeordnet sind, dass mit ihnen Teilflüsse desjenigen magnetischen Flusses bestimmbar sind, den das axiale Streufeld des permanentmagnetischen Rotors (1) erzeugt.

2. Drehantrieb nach Anspruch 1, bei welchem die Sensoren (S1, S2, S3) derart angeordnet sind, dass die Teilflüsse des magnetischen Flusses in einer ersten Messrichtung (M1) und in einer zweiten Messrichtung (M2) bestimmbar sind, wobei die Messrichtungen (M1, M2) jeweils senkrecht bezüglich der axialen Richtung verlaufen, die durch die Soll-Drehachse (A) des Rotors (1) festgelegt ist.

3. Drehantrieb nach Anspruch 1 oder 2, wobei der Rotor (1) scheiben- oder ringförmig ausgestaltet ist und die Sensoren (S1, S2, S3) bezüglich der axialen Richtung versetzt zum Rotor (1) angeordnet sind.

4. Drehantrieb nach einem der vorangehenden Ansprüche, bei welchem die Sensoren (S1, S2, S3) ausserhalb des Raums angeordnet sind, der sich zwischen dem Rotor (1) und dem Stator (2) befindet.

5. Drehantrieb nach einem der vorangehenden Ansprüche, bei welchem die Sensoren (S1,S2,S3) in einer gemeinsamen Messebene angeordnet sind, die sich senkrecht zur axialen Richtung erstreckt.

6. Drehantrieb nach einem der Ansprüche 2-5, bei welchem die Sensoren (S1,S2,S3) so angeordnet sind, dass die erste und die zweite Messrichtung (M1,M2) unter einem Winkel zueinander verlaufen, der ungefähr 90° ist oder ungleich einem ganzzahligen Vielfachen des Quotienten aus 180° und der Polpaarzahl des Rotors (1) ist.

7. Drehantrieb nach einem der Ansprüche 2 bis 5, bei welchem die Sensoren (S1,S2,S3) so angeordnet sind, dass die erste und die zweite Messrichtung (M1,M2) unter einem Winkel zueinander verlaufen, der gleich dem Quotienten aus 90° und der Polpaarzahl des Rotors ist.

8. Drehantrieb nach einem der vorangehenden Ansprüche, bei welchem mindestens ein weiterer Sensor (S3) vorgesehen ist, mit dem der Teilfluss des magnetischen Flusses des Streufelds des permanentmagnetischen Rotors (1) in einer weiteren Messrichtung (M3) bestimmbar ist, die von der ersten und der zweiten Messrichtung (M1,M2) verschieden ist.

9. Drehantrieb nach einem der vorangehenden Ansprüche, wobei jeder Sensor (S1,S2,S3) zwei Sensorelemente (S11,S12,S21,S22) umfasst, die bezüglich der Soll-Drehachse (A) des Rotors (1) um 180° in Drehrichtung (D) des Rotors (1) versetzt zueinander angeordnet sind.

10. Drehantrieb nach einem der vorangehenden Ansprüche, bei welchem die Sensoren (S1,S2,S3) und/oder Sensorelemente (S11,S12,S21,S22) den diametralen, den radialen oder den tangentialen Teilfluss messen.

11. Drehantrieb nach einem der vorangehenden Ansprüche, wobei der Stator (2) mehrere radial in Richtung auf den Rotor (1) verlaufende Statorzähne (20) aufweist, und bei welcher mindestens zwei Lagesensoren (LS1,LS2,LS3) zur Bestimmung der radialen Position des Rotors (1) vorgesehen sind, die so angeordnet sind, dass mit ihnen der magnetische Fluss im Raum zwischen dem Rotor (1) und dem Stator (2) an zwei unterschiedlichen Messorten bestimmbar ist.

12. Drehantrieb nach Anspruch 11, bei welchem die Lagesensoren (LS1,LS2,LS3) jeweils in einer Lücke (21) zwischen zwei benachbarten Statorzähnen (20) angeordnet sind.

13. Drehantrieb nach Anspruch 11 oder 12 mit mindestens drei Lagesensoren (LS1,LS2,LS3), die so angeordnet sind, dass mit ihnen der magnetische Fluss im Raum zwischen dem Rotor (1) und dem Stator (2) an drei unterschiedlichen Messorten bestimmbar ist, deren Lage so ist, dass für jeden Rotorwinkel ($\alpha_R$) die Winkellage von mindestens zwei Messorten von der Winkellage der Nulldurchgänge der Rotormagnetisierung verschieden ist.

14. Drehantrieb nach einem der Ansprüche 11-13, wobei jeder Lagesensor (LS1,LS2,LS3) zwei Sensorelemente umfasst, die bezüglich der Soll-Drehachse (A) des Rotors (1) um 180° in Drehrichtung (D) des Rotors (1) versetzt zueinander angeordnet sind.

15. Verfahren für den Betrieb eines elektromagnetischen Drehantriebs, der als lagerloser Motor mit einem magnetisch gelagerten, permanentmagnetischen Rotor (1) und einem Stator (2) ausgestaltet ist, wobei der Stator als Lager- und Antriebs Stator ausgestaltet ist und der Drehantrieb keine separaten Magnetlager für den Rotor aufweist bei welchem Verfahren die Richtung der Rotormagnetisierung mit Hilfe von mindestens zwei Sensoren (S1,S2,S3) zum Bestimmen eines magnetischen Flusses bestimmt wird, **dadurch gekennzeichnet, dass** zur Bestimmung der Richtung der Rotormagnetisierung Teilflüsse desjenigen magnetischen Flusses herangezogen werden, den das axiale Streufeld des permanentmagnetischen Rotors (1) erzeugt.

16. Verfahren nach Anspruch 15, bei welchem die Teilflüsse des magnetischen Flusses des Streufeldes in einer ersten und in einer zweiten Messrichtung (M1,M2) bestimmt werden, welche Messrichtungen (M1,M2) jeweils senkrecht bezüglich der axialen Richtung verlaufen, die durch die Soll-Drehachse (A) des Rotors (1) festgelegt ist.

17. Verfahren nach Anspruch 15 oder 16, bei welchem die Teilflüsse des magnetischen Flusses ausserhalb des Raums bestimmt werden, der sich zwischen dem Rotor (1) und dem Stator (2) befindet.

18. Verfahren nach einem der Ansprüche 15-17, bei welchem die Teilflüsse des magnetischen Flusses jeweils im gleichen axialen Abstand vom Rotor (1) bestimmt werden.

**19.** Verfahren nach einem der Ansprüche 15-18, bei welchem die Richtung der Rotormagnetisierung durch eine trigonometrische Analyse der Teilflüsse oder durch einen Vergleich der Teilflüsse mit einer elektronischen Nachschlagtabelle bestimmt wird.

**20.** Verfahren nach einem der Ansprüche 15-19, bei welchem die Differenzsignale von jeweils zwei einen Sensor (S1,S2) bildenden Sensorelementen (S11,S12,S21,S22), die bezüglich der Soll-Drehachse (A) des Rotors (1) um 180° in Drehrichtung (D) des Rotors (1) versetzt zueinander angeordnet sind, zur Bestimmung der Richtung der Rotormagnetisierung herangezogen wird.

**21.** Verfahren nach einem der Ansprüche 15-20, bei welchem vom Stator (2) erzeugte Streufelder rechnerisch kompensiert werden.

**22.** Verfahren nach einem der Ansprüche 15-21, bei welchem die Teilflüsse des magnetischen Flusses des Streufelds des Rotors zur Bestimmung der axialen Position des Rotors (1) herangezogen werden.

**23.** Verfahren nach Anspruch 22, wobei der Zusammenhang zwischen den Signalen der Sensoren (S1,S2,S3) und der axialen Position des Rotors (1) in einer elektronischen Nachschlagtabelle abgespeichert ist, und beim Betrieb des Drehantriebs mit Hilfe dieser elektronischen Nachschlagtabelle die axiale Position des Rotors (1) aus den Teilflüssen des magnetischen Flusses des Streufelds bestimmt wird.

**24.** Verfahren nach einem der Ansprüche 15-23, bei welchem mittels der Sensoren (S1,S2,S3) und/oder Sensorelemente (S11,S12,S21,S22) der diametrale, der radiale oder der tangentiale Teilfluss ermittelt wird.

**25.** Verfahren nach einem der Ansprüche 15-24, wobei der Stator (2) mehrere radial in Richtung auf den Rotor (1) verlaufende Statorzähne aufweist, bei welchem Verfahren ferner der magnetische Fluss im Raum zwischen dem Rotor (1) und dem Stator (2) an zwei unterschiedlichen Messorten bestimmt wird, und bei welchem die radiale Position des Rotors (1) unter Verwendung der Richtung der Rotormagnetisierung, dem an den Messorten im Raum zwischen dem Rotor und dem Stator bestimmten magnetischen Fluss sowie der Flussverteilung im Luftspalt bei zentrischem Rotor ermittelt wird.

**26.** Verfahren nach Anspruch 25, bei welchem der magnetische Fluss im Raum zwischen dem Rotor (1) und dem Stator (2) an mindestens drei verschiedenen Messorten bestimmt wird, die so gewählt werden, dass für jeden Rotorwinkel ($\alpha_R$) die Winkellage von mindestens zwei Messorten von der Winkellage der Nulldurchgänge der Rotormagnetisierung verschieden ist.

**27.** Verfahren nach einem der Ansprüche 25 oder 26, bei welchem zusätzlich der magnetische Fluss im Raum zwischen dem Rotor (1) und dem Stator (2) an denjenigen Orten bestimmt und zur Ermittelung der radialen Position des Rotors (1) herangezogen wird, die bezüglich der Messorte um 180° in Drehrichtung (D) des Rotors (1) gesehen versetzt sind.

**Claims**

**1.** An electromagnetic rotary drive which is designed as a bearing-free motor having a magnetically journalled permanent magnetic rotor (1) and a stator (2), wherein the stator (2) is designed as a bearing stator and drive stator and the rotary drive does not have any separate magnetic bearing for the rotor, including a sensor arrangement for determining the direction of the rotor magnetization and/or the axial position of the rotor (1), said sensor arrangement including at least two sensors (S1, S2, S3) for the determination of a magnetic flux,
**characterized in that** the two sensors (S1, S2, S3) are arranged with respect to the rotor (1) such that with them partial fluxes of that magnetic flux can be determined which is produced by the axial stray field of the permanent magnetic rotor (1).

**2.** A rotary drive in accordance with claim 1 in which the sensors (S1, S2, S3) are arranged such that the partial fluxes of the magnetic flux can be determined in a first measuring device (M1) and in a second measuring device (M2), with the measuring devices (M1, M2) each extending perpendicular with respect to the axial direction which is specified by the desired axis of rotation (A) of the rotor (1).

**3.** A rotary drive in accordance with claim 1 or claim 2, wherein the rotor (1) is of disc-like or ring-like design and the sensors (S1, S2, S3) are arranged offset to the rotor (1) with respect to the axial direction.

4. A rotary drive in accordance with any one any of the preceding claims in which the sensors (S1, S2, S3) are arranged outside of the space which is present between the rotor (1) and the stator (2).

5. A rotary drive in accordance with any one of the preceding claims in which the sensors (S1, S2, S3) are arranged in a common measuring plane which extends perpendicular to the axial direction.

6. A rotary drive in accordance with any one of the claims 2 to 5, in which the sensors (S1, S2, S3) are so arranged that the first and second measuring devices (M1, M2) extend at an angle to one another which is approximately 90° or different from an integral multiple of the quotient of 180° and the pole pair number of the rotor (1).

7. A rotary drive in accordance with any one of the claims 2 to 5 in which the sensors (S1, S2, S3) are so arranged that the first and second measuring devices (M1, M2) extend at an angle to one another which is the same as the quotient of 90° and the pole pair number of the rotor.

8. A rotary drive in accordance with any one of the preceding claims, in which at least one further sensor (S3) is provided with which the partial flux of the magnetic flux of the stray field of the permanent magnetic rotor (1) can be determined in a further measuring device (M3) which is different from the first and second measuring devices (M1, M2).

9. A rotary drive in accordance with any one of the preceding claims, wherein each sensor (S1, S2, S3) includes two sensor elements (S11, S12, S21, S22) which are arranged offset to one another with respect to the desired axis of rotation (A) of the rotor (1) by 180° in the direction of rotation (D) of the rotor (1).

10. A rotary drive in accordance with any one of the preceding claims, in which the sensors (S1, S2, S3) and/or sensor elements (S11, S12, S21, S22) measure the diametral partial flux, the radial partial flux or the tangential partial flux.

11. A rotary drive in accordance with any one of the preceding claims, wherein the stator (2) has a plurality of stator teeth (20) extending radially in the direction towards the rotor (1) and in which at least two position sensors (LS1, LS2, LS3) are provided for determining the radial position of the rotor (1) and are arranged such that with them the magnetic flux in the space between the rotor (1) and the stator (2) can be determined at two different measuring locations.

12. A rotary drive in accordance with claim 11, in which the position sensors (LS1, LS2, LS3) are each arranged in a gap (21) between two adjacent stator teeth (20).

13. A rotary drive in accordance with claim 11 or claim 12 having at least three position sensors (LS1, LS2, LS3) which are so arranged that with them the magnetic flux can be determined in the space between the rotor (1) and the stator (2) at three different measuring locations, the position of which is such that for each rotor angle ($\alpha_R$) the angular position of at least two measuring locations is different from the angular position of the zero passages of the rotor magnetization.

14. A rotary drive in accordance with any one of the claims 11 to 13, wherein each position sensor (LS1, LS2, LS3) includes two sensor elements which are arranged offset to one another with respect to the desired axis of rotation (A) of the rotor (1) by 180° in the direction of rotation (D) of the rotor (1).

15. A method for the operation of an electromagnetic rotary drive which is designed as a bearing-free motor having a magnetically journalled permanent magnetic rotor (1) and a stator (2), wherein the stator (2) is designed as a bearing and drive stator and the rotary drive has no separate magnetic bearing for the rotor, in which method the direction of the rotor magnetization is determined with the aid of at least two sensors (S1, S2, S3) for the determination of a magnetic flux, **characterized in that** for the determination of the direction of the rotor magnetization partial fluxes of that magnetic flux are used which is generated by the axial stray field of the permanent magnetic rotor (1).

16. A method in accordance with claim 15 in which the partial fluxes of the magnetic flux of the stray field are determined in a first measuring device (M1) and in a second measuring device (M2), said measuring devices (M 1, M2) respectively extending perpendicular with respect to the axial direction which is determined by the desired axis of rotation (A) of the rotor (1).

**17.** A method in accordance with claim 15 or claim 16 in which the partial fluxes of the magnetic flux are determined outside of the space which is located between the rotor (1) and the stator (2).

**18.** A method in accordance with any one of the claims 15 to 17 in which the partial fluxes of the magnetic flux are respectively determined at the same spacing from the rotor (1).

**19.** A method in accordance with any one of the claims 15 to 18, in which the direction of the rotor magnetization is determined by a trigonometric analysis of the partial fluxes or by a comparison of the partial fluxes with an electronic lookup table.

**20.** A method in accordance with any one of the claims 15 to 19, in which the difference signals of in each case two sensor elements (S11, S12, S21, S22), which respectively form a sensor (S1, S2, S3) and which are offset relative to each other with respect to the desired axis of rotation (A) of the rotor (1) by 180° in the direction of rotation (D) of the rotor (1), are used for the determination of the direction of the rotor magnetization.

**21.** A method in accordance with any one of the claims 15 to 20, in which stray fields produced by the stator (2) are computationally compensated.

**22.** A method in accordance with any one of the claims 15 to 21, in which the partial fluxes of the magnetic flux of the stray field of the rotor are used for the determination of the axial position of the rotor (1).

**23.** A method in accordance with claim 22, wherein the relationship between the signals of the sensors (S1, S2, S3) and the axial position of the rotor (1) is stored in an electronic lookup table and, on the operation of the rotary drive, the axial position of the rotor (1) is determined from the partial fluxes of the magnetic flux of the stray field with the aid of this electronic lookup table.

**24.** A method in accordance with any one of the claims 15 to 23, in which the diametral, radial or tangential partial flux is determined by means of the sensors (S1, S2, S3) and/or sensor elements (S11, S12, S21, S22).

**25.** A method in accordance with any one of the claims 15 to 24, wherein the stator (2) has a plurality of stator teeth (20) extending radially in the direction towards the rotor (1) in which method the magnetic flux is further determined in the space between the rotor (1) and the stator (2) at two different measuring locations and in which the radial position of the rotor (1) is determined using the direction of the rotor magnetization, the magnetic flux determined at the measuring locations in the space between the rotor and the stator and also the flux distribution in the air gap with a central rotor.

**26.** A method in accordance with claim 25, in which the magnetic flux is determined in the space between the rotor (1) and the stator (2) at at least three different measurement locations which are so selected that for each rotor angle ($\alpha_R$) the angular position of at least two measurement locations is different from the angular position of the zero passages of the rotor magnetization.

**27.** A method in accordance with any one of the claims 25 or 26, in which the magnetic flux in the space between the rotor (1) and the stator (2) is additionally determined at those locations which are offset with respect to the measurement locations by 180° as seen in the direction (D) of the rotor (1) and is used to determine the radial position of the rotor (1).

**Revendications**

**1.** Entraînement rotatif électromagnétique, qui est réalisé comme moteur sans palier avec un rotor à palier magnétique, à aimantation permanente (1) et un stator (2), où le stator (2) est réalisé comme stator de palier et d'entraînement et l'entraînement rotatif ne présente pas de paliers magnétiques séparés pour le rotor, comprenant un agencement de capteurs pour déterminer la direction de l'aimantation du rotor et/ou la position axiale du rotor (1), ledit agencement de capteurs comprenant au moins deux capteurs (S1,S2,S3) pour déterminer un flux magnétique, **caractérisé en ce que** les deux capteurs (S1,S2,S3) sont disposés de telle sorte par rapport au rotor (1) qu'au moyen de ceux-ci, des flux partiels du flux magnétique peuvent être déterminés que produit le champ de dispersion axial du rotor à aimantation permanente (1).

**2.** Entraînement rotatif selon la revendication 1, dans lequel les capteurs (S1,S2,S3) sont disposés de telle sorte que les flux partiels du flux magnétique peuvent être déterminés dans une première direction de mesure (M1) et dans une deuxième direction de mesure (M2), où les directions de mesure (M1,M2) s'étendent chacune perpendiculairement relativement à la direction axiale qui est fixée par l'axe rotatif de consigne (A) du rotor (1).

**3.** Entraînement rotatif selon la revendication 1 ou 2, où le rotor (1) est réalisé en forme de disque ou d'anneau, et les capteurs (S1,S2,S3) sont disposés, relativement à la direction axiale, d'une manière décalée au rotor (1).

**4.** Entraînement rotatif selon l'une des revendications précédentes, dans lequel les capteurs (S1,S2,S3) sont disposés à l'extérieur de l'espace qui se trouve entre le rotor (1) et le stator (2).

**5.** Entraînement rotatif selon l'une des revendications précédentes, dans lequel les capteurs (S1,S2,S3) sont disposés dans un plan de mesure commun qui s'étend perpendiculairement à la direction axiale.

**6.** Entraînement rotatif selon l'une des revendications 2 à 5, dans lequel le capteur (S1,S2,S3) sont disposés de telle sorte que la première et la deuxième direction de mesure (M1,M2) s'étendent selon un angle l'une à l'autre, qui est d'environ 90° ou est inégal à un multiple entier du quotient de 180° et du nombre de paires de pôles du rotor (1).

**7.** Entraînement rotatif selon l'une des revendications 2 à 5, dans lequel les capteurs (S1,S2,S3) sont disposés de telle sorte que la première et la deuxième direction de mesure (M1,M2) s'étendent sous un angle l'une à l'autre qui est égal au quotient de 90° et du nombre de paires polaires du rotor.

**8.** Entraînement rotatif selon l'une des revendications précédentes, dans lequel est prévu au moins un capteur supplémentaire (S3) au moyen duquel le flux partiel du flux magnétique du champ de dispersion du rotor à aimantation permanente (1) peut être déterminé dans une autre direction de mesure (M3) qui diffère de la première et de la deuxième direction de mesure (M1,M2).

**9.** Entraînement rotatif selon l'une des revendications précédentes, où chaque capteur (S1,S2,S3) comprend deux éléments de capteur (S11,S12,S21,S22) qui, par rapport à l'axe de rotation de consigne (A) du rotor (1) sont décalés de 180° dans la direction de rotation (D) du rotor (1).

**10.** Entraînement rotatif selon l'une des revendications précédentes, dans lequel les capteurs (S1,S2,S3) et/ou les éléments de capteur (S11,S12,S21,S22) mesurent le flux partiel diamétral, radial ou tangentiel.

**11.** Entraînement rotatif selon l'une des revendications précédentes, où le stator (2) présente plusieurs dents de stator (20) s'étendant radialement en direction du rotor (1), et dans lequel au moins deux capteurs de position (LS1,LS2,LS3) sont prévus pour déterminer la position radiale du rotor (1), qui sont disposés de telle sorte qu'au moyen de ceux-ci, le flux magnétique peut être déterminé dans l'espace entre le rotor (1) et le stator (2) à deux emplacements de mesure différents.

**12.** Entraînement rotatif selon la revendication 11, dans lequel les capteurs de position (LS1,LS2,LS3) sont disposés respectivement dans un entredent (21) entre deux dents de stator avoisinantes (20).

**13.** Entraînement rotatif selon la revendication 11 ou 12 avec au moins trois capteurs de position (LS1,LS2,LS3), qui sont disposés de telle sorte qu'au moyen de ceux-ci, le flux magnétique peut être déterminé dans l'espace entre le rotor (1) et le stator (2) à trois emplacements de mesure différents, dont la position est telle que pour chaque angle de rotor ($\alpha_R$), la positon angulaire d'au moins deux emplacements de mesure diffère de la position angulaire des passages par zéro de l'aimantation du rotor.

**14.** Entraînement rotatif selon l'une des revendications 11 à 13, où chaque capteur de position (LS1,LS2,LS3) comprend deux éléments de capteur qui sont décalés l'un de l'autre par rapport à l'axe de rotation de consigne (A) du rotor (1) de 180° dans la direction de rotation (D) du rotor (1).

**15.** Procédé pour le fonctionnement d'un entraînement rotatif électromagnétique, qui est réalisé comme moteur sans palier avec un rotor (1) logé magnétiquement, à aimantation permanente, et un stator (2), où le stator est réalisé comme stator de palier et d'entraînement, et l'entraînement rotatif ne présente pas de paliers magnétiques séparés pour le rotor, procédé dans lequel est déterminée la direction de l'aimantation du rotor à l'aide d'au moins deux capteurs (S1,S2,S3) pour déterminer un flux magnétique, **caractérisé en ce que**, pour la détermination de la direction de l'aimantation du rotor, des flux partiels du flux magnétique sont utilisés que produit le champ de dispersion axial du rotor à aimantation permanente (1).

**16.** Procédé selon la revendication 15, dans lequel les flux partiels du flux magnétique du champ de dispersion sont déterminés dans une première et une deuxième direction de mesure (M1,M2), lesdites directions de mesure (M1,M2) s'étendant chacune perpendiculairement à la direction axiale qui est fixée par l'axe de rotation de consigne (A) du rotor (1).

**17.** Procédé selon la revendication 15 ou 16, dans lequel les flux partiels du flux magnétique sont déterminés à l'extérieur de l'espace qui se trouve entre le rotor (1) et le stator (2).

**18.** Procédé selon l'une des revendications 15 à 17, dans lequel les flux partiels du flux magnétique sont déterminés à chaque fois à la même distance axiale du rotor (1).

**19.** Procédé selon l'une des revendications 15 à 18, dans lequel la direction de l'aimantation du rotor est déterminée par une analyse trigonométrique des flux partiels ou par une comparaison des flux partiels avec un tableau de consultation électronique.

**20.** Procédé selon l'une des revendications 15 à 19, dans lequel les signaux de différence, à chaque fois de deux éléments de capteur (S11,S12,S21,S22) formant un capteur (S1,S2), qui sont décalés l'un de l'autre par rapport à l'axe de rotation de consigne (A) du rotor (1) de 180° dans la direction de rotation (D) du rotor (1), sont utilisés pour déterminer la direction de l'aimantation du rotor.

**21.** Procédé selon l'une des revendications 15 à 20, dans lequel des champs de dispersion produits par le stator (2) sont compensés par calcul.

**22.** Procédé selon l'une des revendications 15 à 21, dans lequel les flux partiels du flux magnétique du champ de dispersion du rotor sont utilisés pour déterminer la position axiale du rotor (1).

**23.** Procédé selon la revendication 22, où le rapport entre les signaux des capteurs (S1,S2,S3) et la position axiale du rotor (1) est stocké dans un tableau de référence électronique, et lors du fonctionnement de l'entraînement rotatif, à l'aide de ce tableau de référence électronique, la position axiale du rotor (1) est déterminée à partir des flux partiels du flux magnétique du champ de dispersion.

**24.** Procédé selon l'une des revendications 15 à 23, dans lequel, au moyen des capteurs (S1,S2,S3) et/ou des éléments de capteur (S11,S12,S21,S22), le flux partiel diamétral, radial ou tangentiel est déterminé.

**25.** Procédé selon l'une des revendications 15 à 24, où le stator (2) présente plusieurs dents de stator s'étendant radialement en direction du rotor (1), procédé dans lequel est déterminé en outre le flux magnétique dans l'espace entre le rotor (1) et le stator (2) à deux emplacements de mesure différents, et dans lequel la position radiale du rotor (1) est déterminée en utilisant la direction de l'aimantation du rotor, le flux magnétique déterminé aux emplacements de mesure dans l'espace entre le rotor et le stator ainsi que la répartition du flux dans l'entrefer, le rotor étant centré.

**26.** Procédé selon la revendication 25, dans lequel le flux magnétique est déterminé dans l'espace entre le rotor (1) et le stator (2) à au moins trois emplacements de mesure différents qui sont sélectionnés de telle sorte que pour chaque angle de rotor ($\alpha_R$), la position angulaire d'au moins deux emplacements de mesure diffère de la position angulaire des passages par zéro de l'aimantation du rotor.

**27.** Procédé selon l'une des revendications 25 ou 26, dans lequel est déterminé de plus le flux magnétique dans l'espace entre le rotor (1) et le stator (2) aux emplacements et est utilisé pour déterminer la position radiale du rotor (1), qui sont décalés relativement aux emplacements de mesure de 180°, en regardant dans la direction de rotation (D) du rotor (1).

# Fig.1

# Fig.2

Fig.3

RM

Z;A

11

10

Fig.4

10b

RM

10b

10b

11b

10b

RM

RM

10c

Fig.5    10c

11c

10c

10c

RM

## Fig.6

## Fig.7

Fig.8

Fig.9

Fig.10

# Fig.11

# Fig.12

## Fig.13

## Fig.14

## Fig.15

**Fig.13a**

**Fig.13b**

# Fig.16

Fig.17

Fig.18

Fig.19

## Fig.20

## Fig.21

**Fig. 22**

**Fig. 23**

$$d(\delta) = d(\alpha)$$

## Fig. 24

$$B_0(\alpha - \alpha_R)$$

$B_0^*$

−45°  0°  45°  135°  225°  315°   $\alpha - \alpha_R$

Fig.25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9631934 A